(19) Europäisches Patentamt
European Patent Office
Office européen des brevets

(11) **EP 2 093 746 A1**

(12) **EUROPEAN PATENT APPLICATION**
published in accordance with Art. 153(4) EPC

(43) Date of publication:
**26.08.2009 Bulletin 2009/35**

(51) Int Cl.:
*G09G 3/20* (2006.01)     *G09G 5/00* (2006.01)
*H04N 5/20* (2006.01)     *H04N 5/66* (2006.01)

(21) Application number: **07850748.0**

(22) Date of filing: **18.12.2007**

(86) International application number:
**PCT/JP2007/074260**

(87) International publication number:
**WO 2008/075658 (26.06.2008 Gazette 2008/26)**

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **18.12.2006   JP 2006340080**
**23.02.2007   JP 2007043162**
**05.10.2007   JP 2007261601**

(71) Applicant: **Sony Corporation**
**Tokyo 108-0075 (JP)**

(72) Inventors:
• **KONDO, Tetsujiro**
**Minato-ku**
**Tokyo 108-0075 (JP)**
• **TAGO, Takashi**
**Minato-ku**
**Tokyo 108-0075 (JP)**

(74) Representative: **Körber, Martin Hans**
**Mitscherlich & Partner**
**Patent- und Rechtsanwälte**
**Sonnenstraße 33**
**80331 München (DE)**

(54) **IMAGE SIGNAL PROCESSING DEVICE, IMAGE SIGNAL PROCESSING METHOD, AND PROGRAM**

(57)     The present invention relates to an image signal processing device, an image signal processing method, and a program which allow for a natural display equivalent to that of a CRT display apparatus such that an image obtained when an image signal is displayed on a display apparatus of a display type other than that of a CRT display apparatus, for example, on an FPD display apparatus can look like an image displayed on a CRT display apparatus. An ABL processing unit 33 applies a process that has emulated an ABL (Automatic Beam current Limiter) process to an image signal, a VM processing unit 34 applies a process that has emulated a VM (Velocity Modulation) process to this processed image signal, and a CRT γ processing unit 35 performs gamma correction on this processed image signal. The present invention can be applied to a case where, for example, an image that looks like an image displayed on a CRT is displayed on an LCD.

FIG. 2

**Description**

Technical Field

The present invention relates to an image signal processing device, an image signal processing method, and a program. More specifically, the present invention relates to an image signal processing device, an image signal processing method, and a program in which a signal process for an FPD (Flat Panel Display) (flat display) including, for example, an ABL (Automatic Beam current Limiter) process, a VM (Velocity Modulation) process, and a γ process for a CRT (Cathode Ray Tube) is performed to allow an FPD display apparatus that is a display apparatus of an FPD to provide a natural display equivalent to that of a CRT display apparatus that is a display apparatus of a CRT.

Background Art

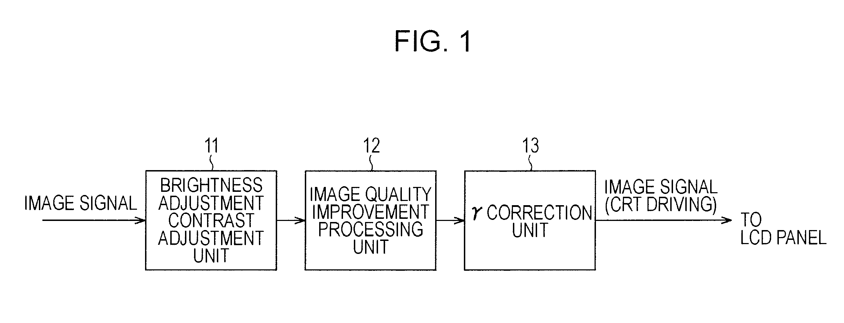

Fig. 1 illustrates a structure of an example of a display apparatus of an FPD (FPD display apparatus), such as, for example, an LCD (Liquid Crystal Display), of the related art.
A brightness adjustment contrast adjustment unit 11 applies an offset to an input image signal to perform brightness adjustment of the image signal, adjusts the gain to perform contrast adjustment of the image signal, and supplies a result to an image quality improvement processing unit 12.
The image quality improvement processing unit 12 performs an image quality improvement process such as DRC (Digital Reality Creation). That is, the image quality improvement processing unit 12 is a processing block for obtaining a high-quality image, performs an image signal process including number-of-pixels conversion and the like on the image signal from the brightness adjustment contrast adjustment unit 11, and supplies a result to a γ correction unit 13.
Here, DRC is described in, for example, Japanese Unexamined Patent Application Publication No. 2005-236634, Japanese Unexamined Patent Application Publication No. 2002-223167, or the like as a class classification adaptive process.
The γ correction unit 13 is a processing block for performing a gamma correction process of adjusting the signal level of a dark portion using a signal process, in addition to γ characteristics inherent to fluorescent materials (light-emitting units of a CRT), for reasons such as poor viewing of a dark portion on a CRT display apparatus.
Here, since an LCD also contains in an LCD panel thereof a processing circuit for adjusting the photoelectric conversion characteristics (transmission characteristics) of liquid crystal to the γ characteristics of the CRT, an FPD display apparatus of the related art performs a γ correction process in a manner similar to that of a CRT display apparatus.
The γ correction unit 13 subjects the image signal from the image quality improvement processing unit 12 to a gamma correction process, and supplies a resulting image signal to an FPD (not illustrated), for example, an LCD. Thereby, an image is displayed on the LCD.
As above, in an FPD display apparatus of the related art, after a contrast or brightness adjustment process is performed, an image signal is directly input to an FPD through an image quality improvement process and a gamma correction process. (Fig. 1)
Thus, in the FPD display apparatus, the brightnesses of an input and a displayed image have a proportional relationship according to gamma. The displayed image, however, becomes an image that seems brighter and more glaring than that of a CRT display apparatus.
Accordingly, there is a method for adaptively improving the gradation representation capability without using a separate ABL circuit in a display apparatus having lower panel characteristics than a CRT in terms of the gradation representation capability for a dark portion (see, for example, Patent Document 1).
Patent Document 1: Japanese Unexamined Patent Application Publication No. 2005-39817

Disclosure of Invention

Technical Problem

Incidentally, as described above, an image displayed on an FPD display apparatus becomes an image that seems brighter and more glaring than that of a CRT display apparatus because only an image signal processing system incorporated in a CRT display apparatus of the related art for performing a process only on an image signal is modified for use in an FPD and is incorporated in an FPD display apparatus. This results from no consideration of a system structure in which a CRT display apparatus is a display apparatus based on comprehensive signal processing, including not only an image signal processing system but also response characteristics specific to a driving system itself and the driving system.
The present invention has been made in view of such a situation, and is intended to allow for a natural display equivalent to that of a CRT display apparatus such that an image obtained when an image signal is displayed on a display apparatus of a display type other than that of a CRT display apparatus, for example, on an FPD display apparatus, can look like an image displayed on a CRT display apparatus. Technical Solution

An image signal processing device or a program of an aspect of the present invention is an image signal processing device for processing an image signal so that an image obtained when the image signal is displayed on a display apparatus of a non-CRT (Cathode Ray Tube) display type looks like an image displayed on a CRT display apparatus, including ABL processing means for applying a process that emulates an ABL (Automatic Beam current Limiter) process to the image signal, VM processing means for applying a process that emulates a VM (Velocity Modulation) process to the image signal processed by the ABL processing means, and gamma correction means for performing gamma correction on the image signal processed by the VM processing means, or a program for causing a computer to function as the image signal processing device.

An image signal processing method of an aspect of the present invention is an image signal processing method for an image signal processing device for processing an image signal so that an image obtained when the image signal is displayed on a display apparatus of a non-CRT (Cathode Ray Tube) display type looks like an image displayed on a CRT display apparatus, including the steps of applying a process that emulates an ABL (Automatic Beam current Limiter) process to the image signal; applying a process that emulates a VM (Velocity Modulation) process to the image signal on which the process that emulates the ABL process has been performed; and performing gamma correction on the image signal on which the process that emulates the VM process has been performed.
Furthermore, the processed image signal is gamma corrected.

In an aspect of the present invention, a process that emulates an ABL process is applied to the image signal and a process that emulates a VM process is applied to the processed image signal.

Advantageous Effects

According to an aspect of the present invention, a natural display equivalent to that of a CRT display apparatus can be performed.

Brief Description of Drawings

[Fig. 1] Fig. 1 is a block diagram illustrating a structure of an example of an FPD display apparatus of the related art.
[Fig. 2] Fig. 2 is a block diagram illustrating an example structure of an embodiment of an image signal processing device included in an FPD display apparatus to which the present invention is applied.
[Fig. 3] Fig. 3 is a block diagram illustrating an example structure of a CRT display apparatus.
[Fig. 4] Fig. 4 is a flowchart explaining a process of the image signal processing device.
[Fig. 5] Fig. 5 is a block diagram illustrating an example structure of a VM processing unit 34.
[Fig. 6] Fig. 6 is a diagram illustrating an example of a VM coefficient.
[Fig. 7] Fig. 7 is a diagram explaining a method of determining a VM coefficient.
[Fig. 8] Fig. 8 is a diagram illustrating a relationship between a beam current and a spot size.
[Fig. 9] Fig. 9 is a diagram illustrating a color identification mechanism.
[Fig. 10] Fig. 10 is a diagram illustrating a spot of an electron beam.
[Fig. 11] Fig. 11 is a diagram illustrating a spot of an electron beam.
[Fig. 12] Fig. 12 is a cross-sectional view illustrating a manner in which an electron beam is radiated in a case where an aperture grille is adopted as a color separation mechanism.
[Fig. 13] Fig. 13 is a diagram illustrating an intensity distribution of electron beams, which is approximated by two-dimensional normal distribution.
[Fig. 14] Fig. 14 is a diagram illustrating an intensity distribution of electron beams passing through slits in the aperture grille.
[Fig. 15] Fig. 15 is a diagram illustrating an intensity distribution of electron beams and an intensity distribution of electron beams passing through slits in the aperture grille among the electron beams.
[Fig. 16] Fig. 16 is a diagram illustrating an intensity distribution of electron beams and an intensity distribution of electron beams passing through slits in a shadow mask among the electron beams.
[Fig. 17] Fig. 17 is a diagram illustrating an intensity distribution of electron beams and an intensity distribution of electron beams passing through slits in the shadow mask among the electron beams.
[Fig. 18] Fig. 18 is a diagram explaining the integration for determining the intensity of an electron beam passing through a slit.
[Fig. 19] Fig. 19 is a diagram illustrating a manner in which an electron beam is incident on an aperture grille serving as a color separation mechanism.

[Fig. 20] Fig. 20 is a diagram illustrating pixels and an intensity distribution of electron beams.

[Fig. 21] Fig. 21 is a diagram illustrating an example structure of a circuit for determining an amount of EB influence.

[Fig. 22] Fig. 22 is a block diagram illustrating an example structure of an EB processing unit 220.

[Fig. 23] Fig. 23 is a block diagram illustrating another example structure of the EB processing unit 220.

[Fig. 24] Fig. 24 is a block diagram illustrating an example structure of a section of a CRT $\gamma$ processing unit 35 that performs a color temperature compensation process.

[Fig. 25] Fig. 25 is a block diagram illustrating another example structure of the VM processing unit 34.

[Fig. 26] Fig. 26 is a block diagram illustrating an example structure of a luminance correction unit 310.

[Fig. 27] Fig. 27 is a diagram explaining a luminance correction process.

[Fig. 28] Fig. 28 is a block diagram illustrating another example structure of the luminance correction unit 310.

[Fig. 29] Fig. 29 is a flowchart explaining a learning process for determining a tap coefficient as a VM coefficient.

[Fig. 30] Fig. 30 is a flowchart explaining a learning process for determining a class prediction coefficient.

[Fig. 31] Fig. 31 is a block diagram illustrating an example structure of an embodiment of a computer.

Explanation of Reference Numerals

11 brightness adjustment contrast adjustment unit, 12 image quality improvement processing unit, 13 $\gamma$ correction unit, 31 brightness adjustment contrast adjustment unit, 32 image quality improvement processing unit, 33 ABL processing unit, 34 VM processing unit, 35 CRT $\gamma$ processing unit, 36 full screen brightness average level detection unit, 37 peak detection differential control value detection unit, 38 ABL control unit, 39 VM control unit, 40 display color temperature compensation control unit, 51 brightness adjustment contrast adjustment unit, 52 image quality improvement processing unit, 53 gain adjustment unit, 54 $\gamma$ correction unit, 55 video amplifier, 56 CRT, 57 FBT, 58 beam current detection unit, 59 ABL control unit, 60 image signal differentiating circuit, 61 VM driving circuit, 101 bus, 102 CPU, 103 ROM, 104 RAM, 105 hard disk, 106 output unit, 107 input unit, 108 communication unit, 109 drive, 110 input/output interface, 111 removable recording medium 210 luminance correction unit, 211 VM coefficient generation unit, 212 computation unit, 220 EB processing unit, 241 EB coefficient generation unit, 242A to 242D and 242F to 242I computation unit, 251 to 259 delay unit, 260 EB coefficient generation unit, 261 product-sum operation unit, 271, 272 selector, 281 control unit, 282 level shift unit, 283 gain adjustment unit, 310 luminance correction unit, 311 delay timing adjustment unit, 312 differentiating circuit, 313 threshold processing unit, 314 waveform shaping processing unit, 315 multiplying circuit, 321 tap selection unit, 322 class classification unit, 323 class prediction coefficient storage unit, 324 prediction unit, 325 class decision unit, 326 tap coefficient storage unit, 327 prediction unit

Best Mode for Carrying Out the Invention

Embodiments of the present invention will be described hereinafter with reference to the drawings.

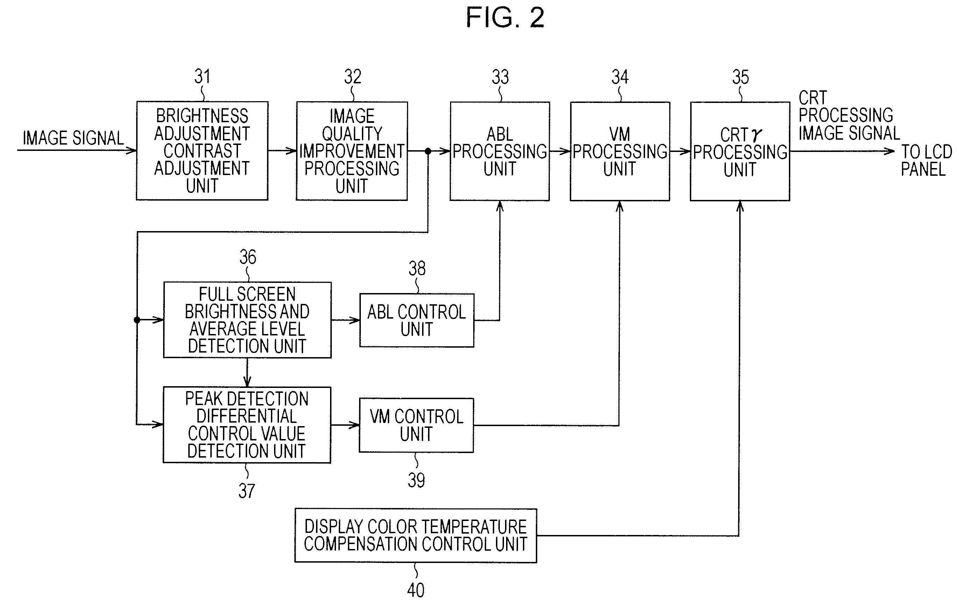

Fig. 2 illustrates an example structure of an embodiment of an image signal processing device included in an FPD display apparatus to which the present invention is applied.

The image signal processing device of Fig. 2 processes an image signal so that an image obtained when the image signal is displayed on a display apparatus of a display type other than that of a CRT display apparatus, i.e., here, for example, an FPD display apparatus having an FPD such as an LCD, can look like an image displayed on a CRT display apparatus.

Here, before explaining the image signal processing device of Fig. 2, a CRT display apparatus that displays an image to be displayed on the image signal processing device of Fig. 2, i.e., a CRT display apparatus emulated by the image signal processing device of Fig. 2, will be explained.

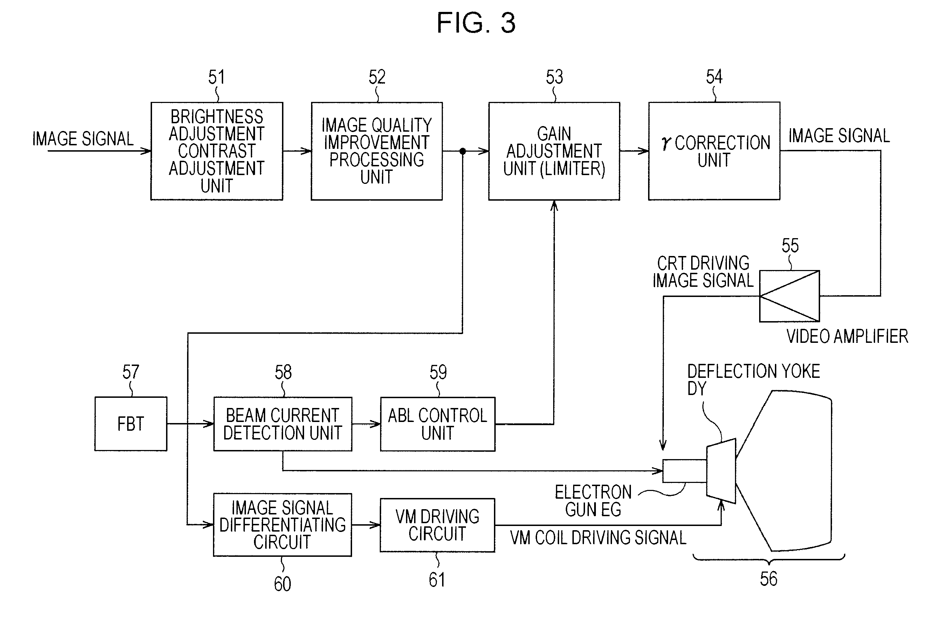

Fig. 3 illustrates an example structure of a CRT display apparatus.

In the CRT display apparatus, in a brightness adjustment contrast adjustment unit 51 and an image quality improvement processing unit 52, an image signal is subjected to processes similar to those of the brightness adjustment contrast adjustment unit 11 and image quality improvement processing unit 12 of Fig. 1, respectively, and the processed image signal is supplied to a gain adjustment unit 53 and an image signal differentiating circuit 60.

The gain adjustment unit (limiter) 53 limits the signal level of the image signal from the image quality improvement processing unit 52 according to an ABL control signal from an ABL control unit 59 described below, and supplies a result to a $\gamma$ correction unit 54. That is, the gain adjustment unit 53 adjusts the gain of the image signal from the image quality improvement processing unit 52 instead of directly limiting the amount of current of an electron beam of a CRT 56 described below.

The $\gamma$ correction unit 54 subjects the image signal from the gain adjustment unit 53 to a $\gamma$ correction process which is similar to that of the $\gamma$ correction unit 13 of Fig. 1, and supplies a resulting image signal to a video (Video) amplifier 55.

The video amplifier 55 amplifies the image signal from the $\gamma$ correction unit 54, and supplies a result to the CRT 56 as a CRT driving image signal.

On the other hand, an FBT (Flyback Transformer) 57 is a transformer for generating a horizontal deflection drive current for providing horizontal scanning of an electron beam and an anode voltage of the CRT (Braun tube) 56 in the CRT display apparatus, the output of which is supplied to a beam current detection unit 58.

The beam current detection unit 58 detects the amount of current of an electron beam necessary for ABL control from the output of the FBT 57, and supplies the amount of current to the CRT 56 and an ABL control unit 59.

The ABL control unit 59 measures a current value of the electron beam from the beam current detection unit 58, and outputs an ABL control signal for ABL control for controlling the signal level of the image signal to the gain adjustment unit 53.

On the other hand, the image signal differentiating circuit 60 differentiates the image signal from the image quality improvement processing unit 52 and supplies a resulting differentiated value of the image signal to a VM driving circuit 61.

The VM (Velocity Modulation) driving circuit 61 performs a VM process of partially changing the deflection (horizontal deflection) velocity of an electron beam in the CRT display apparatus so that the display luminance of even the same image signal is changed. In the CRT display apparatus, the VM process is implemented using a dedicated VM coil (not illustrated) and the VM driving circuit 61 separate from a main horizontal deflection circuit (which is constituted by a deflection yoke DY, the FBT 57, a horizontal driving circuit (not illustrated), and the like).

That is, the VM driving circuit 61 generates a VM coil driving signal for driving the VM coil on the basis of the differentiated value of the image signal from the image signal differentiating circuit 60, and supplies the VM coil driving signal to the CRT 56.

The CRT 56 is constituted by an electron gun EG, the deflection yoke DY, and the like. In the CRT 56, the electron gun EG emits an electron beam in accordance with the output of the beam current detection unit 58 or the CRT driving image signal from the video amplifier 55, and the electron beam is changed (and scanned) in the horizontal and vertical directions in accordance with magnetic fields generated by the deflection yoke DY serving as a coil, and impinges on a fluorescent surface of the CRT 56. Thereby, an image is displayed.

Further, in the CRT 56, the VM coil is driven in accordance with the VM coil driving signal from the VM driving circuit 61. Thereby, the deflection velocity of the electron beam is partially changed, thereby providing, for example, enhancement or the like of edges of an image to be displayed on the CRT 56.

As can be seen from Fig. 3, in the CRT display apparatus, the VM process of partially changing the deflection velocity and the ABL process (ABL control) of limiting the amount of current of the electron beam are performed on a path other than the path on which the image signal is processed, and a control signal that has the influence on the image quality of the image to be displayed on the CRT 56 is produced.

In order to display on an FPD such an image in which the influence by the VM process and the ABL process appears, it is necessary to take the form of performing processes equivalent to the VM process and the ABL process over the path over which the image signal is processed because the driving method of the FPD is completely different from that of a CRT.

Accordingly, the image signal processing device of Fig. 2 converts the image signal in the processing order as illustrated in Fig. 2, thereby enabling adaptation to the driving method of the FPD and natural display similar to that of a CRT display apparatus.

That is, in the image signal processing device of Fig. 2, in a brightness adjustment contrast adjustment unit 31 and an image quality improvement processing unit 32, an image signal is subjected to processes similar to those of the brightness adjustment contrast adjustment unit 11 and image quality improvement processing unit 12 of Fig. 1, respectively, and a result is supplied to an ABL processing unit 33, a full screen brightness average level detection unit 36, and a peak detection differential control value detection unit 37.

In order to obtain, at the LCD, brightness characteristics similar to those of a CRT, the ABL processing unit 33 performs an ABL emulation process of limiting the level of the image signal from the image quality improvement processing unit 32 according to the control from an ABL control unit 38 in a case where an image having a brightness (luminance and its area) of a certain value or more is obtained.

Here, the ABL emulation process in Fig. 2 is a process that emulates the ABL process in Fig. 3.

That is, an ABL process performed in a CRT display apparatus is a process of limiting a current, in a case where a brightness (luminance and its area) of a certain value of more is obtained in a CRT, so as not to cause an excessive amount of electron beam (current). The ABL processing unit 33, however, performs emulation of the ABL process in Fig. 3.

In Fig. 2, the ABL processing unit 33 perform a process (ABL emulation process) of limiting current of an electron beam in the CRT to keep the actual display luminance low, in a case where a bright image having a large area is to be displayed, as a process of limiting the signal level of the image signal, by using a non-linear computation process.

That is, in Fig. 2, the full screen brightness average level detection unit 36 detects the brightness or average level of the screen on the basis of the image signal from the image quality improvement processing unit 32, and supplies a result to the peak detection differential control value detection unit 37 and the ABL control unit 38. The ABL control unit 38 detects the brightness of the screen and the area thereof from the detected brightness or average level of the screen from the full screen brightness average level detection unit 36 to thereby generate a control signal for limiting the brightness on the screen, and supplies the control signal to the ABL processing unit 33. The ABL processing unit 33 implements (emulates) the ABL process by performing the non-linear computation described above on the image signal from the image quality improvement processing unit 32 on the basis of the control signal from the ABL control unit 38.

The image signal subjected to the ABL process in the ABL processing unit 33 is supplied to a VM processing unit 34.

The VM processing unit 34 is a processing block for performing a process equivalent to the VM process in the CRT display apparatus of Fig. 3 on the image signal, and performs emulation of the VM process performed by the CRT display apparatus of Fig. 3.

That is, in Fig. 2, the peak detection differential control value detection unit 37 determines a partial peak signal of the image signal or an edge signal obtained by the differentiation of the image signal from the image signal from the image quality improvement processing unit 32, and supplies a result to a VM control unit 39 together with the brightness or average level of the screen from the full screen brightness average level detection unit 36. The VM control unit 39 generates a VM control signal for partially changing the level of the image signal, which is equivalent to the VM coil driving signal in the CRT display apparatus, based on the partial peak signal of the image signal, the edge signal obtained by the differentiation of the image signal, the brightness of the screen, or the like from the peak detection differential control value detection unit 37, and supplies the VM control signal to the VM processing unit 34.

The VM processing unit 34 performs a process for partially changing the level of the image signal from the ABL processing unit 33 according to the VM control signal generated by the VM control unit 39, that is, a process such as partial correction of the image signal or enhancement of an edge portion or a peak of the image signal.

Here, in the CRT display apparatus of Fig. 3, a VM process is performed in order to supplement insufficient change in luminance at a rising edge of the signal in the CRT 56. Instead of applying correction to the image signal itself, the deflection velocity (time) of horizontal deflection specific to the CRT 56 is changed using the VM coil located in the deflection yoke DY, thereby consequently changing the luminance.

The VM processing unit 34 performs a computation process of computing a correction value equivalent to the amount of change in luminance caused by the VM process performed in the CRT display apparatus and correcting the image signal using this correction value, thereby emulating the VM process performed in the CRT display apparatus.

A CRT $\gamma$ processing unit 35 performs a process of adjusting the level of each color signal (component signal) in order to perform, in the LCD, a $\gamma$ correction process including a process performed in a processing circuit (conversion circuit) for obtaining $\gamma$ characteristics equivalent to those of a CRT, which is provided in an LCD panel of the related art inside the panel, and a color temperature compensation process.

Here, the CRT $\gamma$ processing unit 35 in Fig. 2 is a section that corrects electro-optical conversion characteristics necessary for representing a plurality of display characteristics as well as the characteristics of a CRT, such as a PDP or LED display, on the same LCD screen, and performs, in the present embodiment, a process necessary for adjusting the input-voltage-transmittance characteristic of the LCD to the electro-luminance characteristic of a CRT.

That is, in Fig. 2, the display color temperature compensation control unit 40 segments the display screen of the LCD into a plurality of display areas, and generates a control signal for displaying as a CRT color temperature a display color temperature of a display area, where an image with image quality similar to that of an image that will be displayed on a CRT in a system for presenting, to the individual display areas, images with image quality similar to that of images that will be displayed on display devices having a plurality of different display characteristics, in order to perform control to adjust the balance between the respective color signals (component signals). The control signal is supplied to the CRT $\gamma$ processing unit 35. Then, the CRT $\gamma$ processing unit 35 also performs a process of adjusting the balance between the respective color signals of the image signal from the VM processing unit 34 according to the control signal from the display color temperature compensation control unit 40.

White balance, color temperature, and luminance change with respect thereto differ depending on a CRT, an LCD, and a PDP. Thus, the display color temperature compensation control unit 40 of Fig. 2 is necessary.

The process performed by the CRT $\gamma$ processing unit 35 according to the control signal from the display color temperature compensation control unit 40 includes a process performed by a processing circuit that has converted the gradation characteristics of each panel so as to become equivalent to those of a CRT, which has been traditionally processed within a flat panel such as an LCD, and a process of absorbing the difference in characteristic from one display panel to another is performed.

Then, the CRT $\gamma$ processing unit 35 subjects the image signal from the VM processing unit 34 to the foregoing processes and then supplies the processed image signal to an LCD as an FPD (not illustrated) for display.

As above, the image signal processing device of Fig. 2, not only replaces the process performed in a CRT display apparatus with an image signal process but also takes a processing procedure (processing procedure in which the process of the VM processing unit 34 is performed after the process of the ABL processing unit 33 and in which the process of the CRT γ processing unit 35 is performed after the process of the VM processing unit 34) into account, thereby enabling more accurate adjustment of the quality of the display on the LCD so as to be close to the image quality of an image displayed on a CRT display apparatus. According to the image signal processing device of Fig. 2, therefore, it is possible to output an image to the LCD using display characteristics equivalent to those of a CRT.

According to the image signal processing device of Fig. 2, furthermore, it is possible to emulate display characteristics caused by different characteristics of a CRT itself, and it is possible to switch between different tints or textures using the same LCD. For example, it is possible to facilitate accurate color adjustment or image quality adjustment, and the like at the sending time by comparison of the difference in color development between an EBU fluorescent material and a normal fluorescent material on the same screen.

Further, according to the image signal processing device of Fig. 2, likewise, it is possible to easily confirm the difference in display characteristics between an LCD and a CRT.

According to the image signal processing device of Fig. 2, furthermore, it is possible to display an image with "favorite image quality" in its original meaning.

Further, according to the image signal processing device of Fig. 2, it is possible to provide simultaneous viewing of images displayed on display devices having different characteristics (for example, a CRT, an LCD, a CRT, and the like having different fluorescent materials) by changing the processing range within the display screen. This facilitates utilization for purposes such as comparison and adjustment.

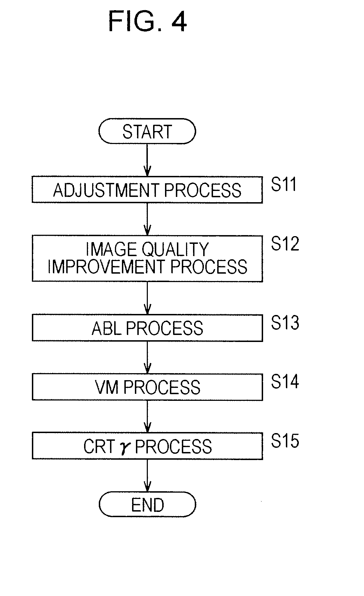

Next, the flow of a process for an image signal by the image signal processing device of Fig. 2 will be explained with reference to a flowchart of Fig. 4.

When an image signal is supplied to the brightness adjustment contrast adjustment unit 31, in step S11, the brightness adjustment contrast adjustment unit 31 performs brightness adjustment of the image signal supplied thereto, followed by contrast adjustment, and supplies a result to the image quality improvement processing unit 32. The process proceeds to step S12.

In step S12, the image quality improvement processing unit 32 performs an image signal process including number-of-pixels conversion and the like on the image signal from the brightness adjustment contrast adjustment unit 11, and supplies an image signal obtained after the image signal process to the ABL processing unit 33, the full screen brightness average level detection unit 36, and the peak detection differential control value detection unit 37. The process proceeds to step S13.

Here, the full screen brightness average level detection unit 36 detects the brightness or average level of the screen on the basis of the image signal from the image quality improvement processing unit 32, and supplies a result to the peak detection differential control value detection unit 37 and the ABL control unit 38. The ABL control unit 38 generates a control signal for limiting the brightness of the screen on the basis of the detected brightness or average level of the screen from the full screen brightness average level detection unit 36, and supplies the control signal to the ABL processing unit 33.

Further, the peak detection differential control value detection unit 37 determines a partial peak signal of the image signal or an edge signal obtained by the differentiation of the image signal from the image signal from the image quality improvement processing unit 32, and supplies a result to the VM control unit 39 together with the brightness or average level of the screen from the full screen brightness average level detection unit 36. The VM control unit 39 generates a VM control signal equivalent to the VM coil driving signal in the CRT display apparatus on the basis of the partial peak signal of the image signal, the edge signal obtained by the differentiation of the image signal, the brightness of the screen, or the like from the peak detection differential control value detection unit 37, and supplies the VM control signal to the VM processing unit 34.

In step S33, the ABL processing unit 33 applies a process that emulates an ABL process to the image signal from the image quality improvement processing unit 32.

That is, the ABL processing unit 33 performs a process (ABL emulation process) that emulates an ABL process such as limiting the level of the image signal from the image quality improvement processing unit 32 according to the control from the ABL control unit 38, and supplies a resulting image signal to the VM processing unit 34.

Then, the process proceeds from step S13 to step S14, in which the VM processing unit 34 applies a process that emulates a VM process to the image signal from the ABL processing unit 33.

That is, in step S14, the VM processing unit 34 performs a process (VM emulation process) that emulates a VM process such as correcting the luminance of the image signal from the ABL processing unit 33 according to the VM control signal supplied from the VM control unit 39, and supplies a resulting image signal to the CRT γ processing unit 35. The process proceeds to step S15.

In step S15, the CRT γ processing unit 35 subjects the image signal from the VM processing unit 34 to a γ correction process, and further performs a color temperature compensation process of adjusting the balance of the respective colors of the image signal from the VM processing unit 34 according to the control signal from the display color temperature compensation control unit 40. Then, The CRT γ processing unit 35 supplies an image signal obtained as a result of the color temperature compensation process to an LCD as an FPD (not illustrated) for display.

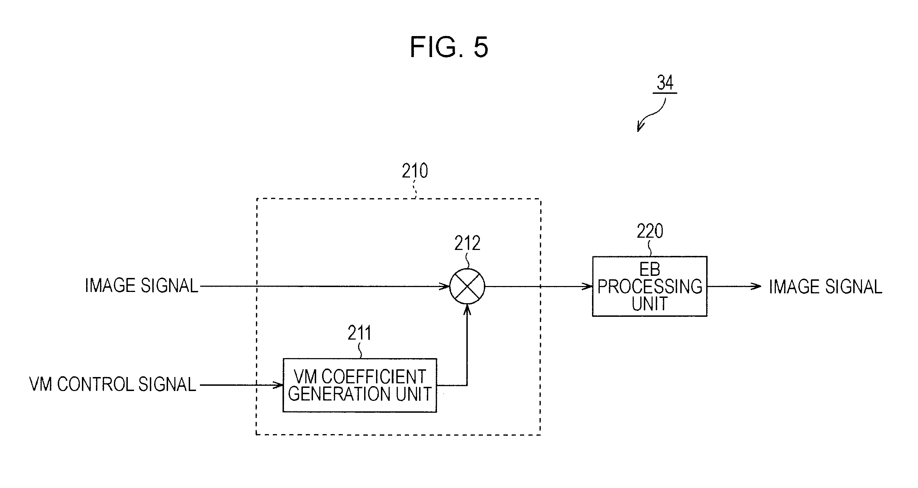

Next, Fig. 5 is a block diagram illustrating an example structure of the VM processing unit 34 of Fig. 2.

In Fig. 5, the VM processing unit 34 is constructed from a luminance correction unit 210 and an EB processing unit 220.

The luminance correction unit 210 performs a luminance correction process, for the image signal supplied from the ABL processing unit 33 (Fig. 2), for correcting the amount of influence of a change in deflection velocity of horizontal deflection of an electron beam of the CRT display apparatus on the luminance, and supplies a resulting image signal to the EB processing unit 220.

That is, the luminance correction unit 210 is constructed from a VM coefficient generation unit 211 and a computation unit 212.

The VM coefficient generation unit 211 is supplied with a VM control signal from the VM control unit 39 (Fig. 2). The VM coefficient generation unit 211 generates a VM coefficient according to the VM control signal from the VM control unit 39, and supplies the VM coefficient to the computation unit 212.

The computation unit 212 is supplied with, in addition to the VM coefficient from the VM coefficient generation unit 211, the image signal from the ABL processing unit 33 (Fig. 2).

The computation unit 212 multiplies the image signal from the ABL processing unit 33 (Fig. 2) by the VM coefficient from the VM coefficient generation unit 211 to correct that image signal for the amount of influence of a change in deflection velocity of horizontal deflection of an electron beam of the CRT display apparatus on the luminance, and supplies an image signal obtained after the correction to the EB processing unit 220.

The EB processing unit 220 subjects the image signal from the luminance correction unit 210 (image signal processed by the ABL processing unit 33 and further processed by the luminance correction unit 210) to a process (EB (Erectron Beam) emulation process) that emulates the electron beam of the CRT display apparatus spreading out and impinging on a fluorescent material of the CRT display apparatus, and supplies a result to the CRT γ processing unit 35 (Fig. 2).

As above, the VM emulation process performed in the VM processing unit 34 is composed of the luminance correction process performed in the luminance correction unit 210 and the EB emulation process performed in the EB processing unit 220.

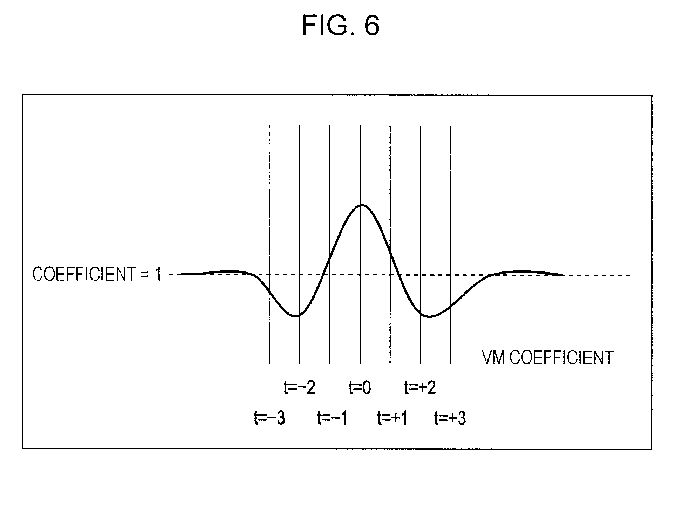

Fig. 6 illustrates an example of a VM coefficient generated in the VM coefficient generation unit 211 of Fig. 5.

The VM coefficient is a coefficient to be multiplied with the pixel values (luminance) of pixels to be corrected for the luminance in order to delay, in the CRT display apparatus, the deflection velocity of horizontal deflection (deflection in the horizontal direction) at the position of a pixel of interest (here, a pixel to be corrected so as to enhance the luminance by a VM process) by the VM coil driving signal to equivalently emulate a VM process of increasing the luminance of the pixel of interest, where a plurality of pixels arranged in the horizontal direction centered on the pixel of interest are used as the pixels to be corrected for the luminance.

In the VM coefficient generation unit 211, as illustrated in Fig. 6, a VM coefficient to be multiplied with the pixel value of the pixel of interest among the pixels to be corrected for the luminance is set to a value of 1 or more, and a VM coefficient to be multiplied with the other pixels is set to a value of 1 or less so that the gain at the computation unit 212 can be 1.

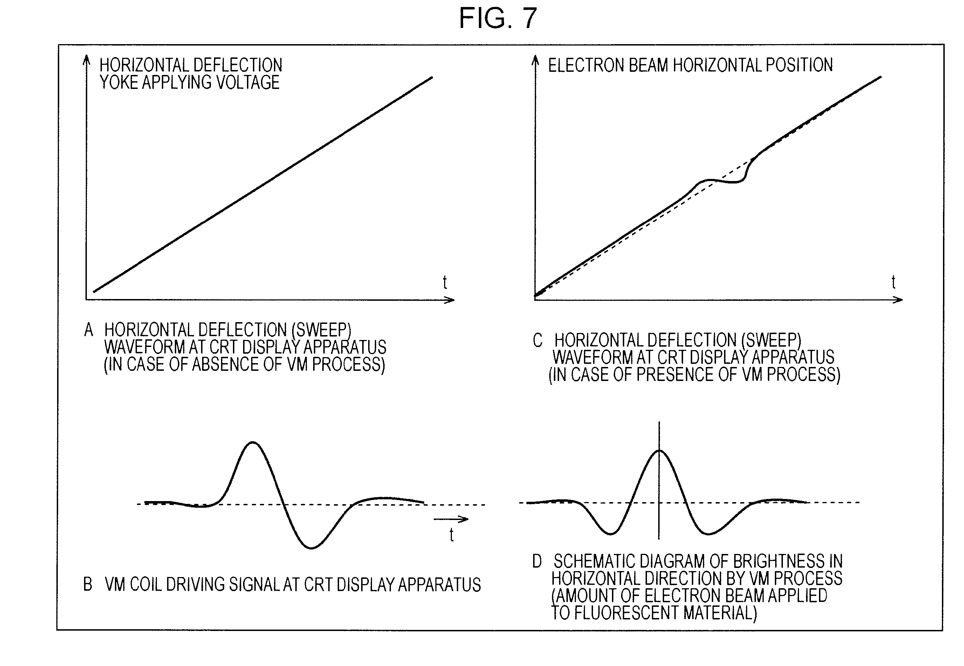

Fig. 7 illustrates a method of determining a VM coefficient generated in the VM coefficient generation unit 211 of Fig. 5.

That is, part A of Fig. 7 illustrates the waveform of a voltage (deflection voltage) applied to the deflection yoke DY (Fig. 3) of the CRT display apparatus.

As illustrated in part A of Fig. 7, a deflection voltage that changes with a certain gradient with time t is repeatedly applied to the deflection yoke DY (Fig. 3) at horizontal scanning intervals.

Part B of Fig. 7 illustrates a VM coil driving signal generated in the VM driving circuit 61 (Fig. 3) of the CRT display apparatus.

In the CRT display apparatus, the VM coil located in the deflection yoke DY (Fig. 3) is driven by the VM coil driving signal of part B of Fig. 7, and the deflection velocity of an electron beam is partially changed by a magnetic field generated by the VM coil, as illustrated in part C of Fig. 7.

That is, part C of Fig. 7 illustrates a temporal change of the position in the horizontal direction of an electron beam in a case where the VM coil generates a magnetic field according to the VM coil driving signal of part B of Fig. 7.

Due to the magnetic field generated by the VM coil, the temporal change of the position in the horizontal direction of the electron beam (the gradient of the graph of part C of Fig. 7), i.e., the deflection velocity of the horizontal deflection of the electron beam, is no longer constant (changes) for a period or the like during which the magnetic field is generated.

Part D of Fig. 7 illustrates a differentiated value of a subtraction value obtained by subtracting the temporal change of the position in the horizontal direction of the electron beam of part C of Fig. 7 from the temporal change of the position in the horizontal direction of the electron beam caused by the deflection voltage of part A of Fig. 7.

Based on a case where the horizontal deflection of the electron beam is performed only by the deflection voltage of part A of Fig. 7, in a case where the VM coil generates a magnetic field according to the VM coil driving signal, the intensity (amount) of the electron beam impinging on the fluorescent materials of the CRT 56 (Fig. 3) of the CRT display apparatus, i.e., the luminance (brightness) of the image displayed on the CRT 56, changes in the manner illustrated in part D of Fig. 7.

The VM coefficient generation unit 211 (Fig. 5) generates a value equivalent to the differentiated value of part D of Fig. 7 as a VM coefficient.

Note that the specific value of the VM coefficient, the range of pixels to be multiplied with the VM coefficient (the pixel value of how many pixels arranged in the horizontal direction centered on the pixel of interest is to be multiplied with the VM coefficient), the pixel value (level) of the pixel to be set as a pixel of interest, and the like are determined depending on the specification or the like of the CRT display apparatus for which the image signal processing device of Fig. 2 emulates the display.

Next, the EB emulation process performed in the EB processing unit 220 of Fig. 5 will be explained.

In the EB emulation process, as described above, a process that emulates an electron beam of the CRT display apparatus spreading out and impinging on a fluorescent material of the CRT 56 (Fig. 3) of the CRT display apparatus is performed.

That is, now, if it is assumed that a pixel (sub-pixel) corresponding to a fluorescent material to which an electron beam is to be radiated is set as a pixel of interest, in a case where the intensity of the electron beam is high, the shape of the spot of the electron beam becomes large so that the electron beam impinges not only on the fluorescent material corresponding to the pixel of interest but also on fluorescent materials corresponding to neighboring pixels thereto to have the influence on the pixel values of the neighboring pixels. In the EB emulation process, a process that emulates this influence is performed.

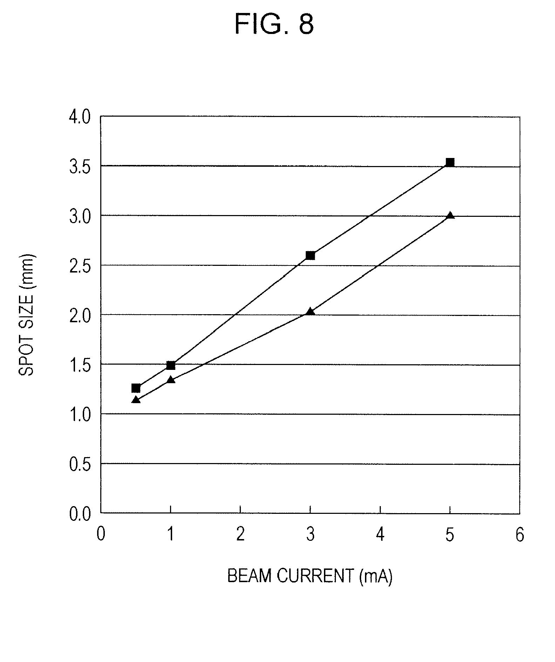

Fig. 8 illustrates a relationship between current (beam current) applied to an electron gun that radiates an electron beam and the diameter (spot size) of a spot formed by the electron beam radiated on the display screen of a CRT in correspondence with the beam current.

Note that in Fig. 8, the relationship between the beam current and the spot size for two CRT types is illustrated.

Although the relationship between the beam current and the spot size may differ depending on the CRT type, the setting of maximum luminance, or the like, the spot size increases as the beam current increases. That is, the higher the luminance, the larger the spot size.

Such a relationship between the beam current and the spot size is described in, for example, Japanese Unexamined Patent Application Publication No. 2004- 39300 or the like.

The display screen of the CRT is coated with a fluorescent materials (fluorescent substances) of three colors, namely, red, green, and blue, and electron beams (used) for red, green, and blue impinge on the red, green, and blue fluorescent materials, thereby discharging light of red, green, and blue. Thereby, an image is displayed.

The CRT is further provided with a color separation mechanism on the display screen thereof having openings through which electron beams pass so that the electron beams of red, green, and blue are radiated on the fluorescent materials of three colors, namely, red, green, and blue.

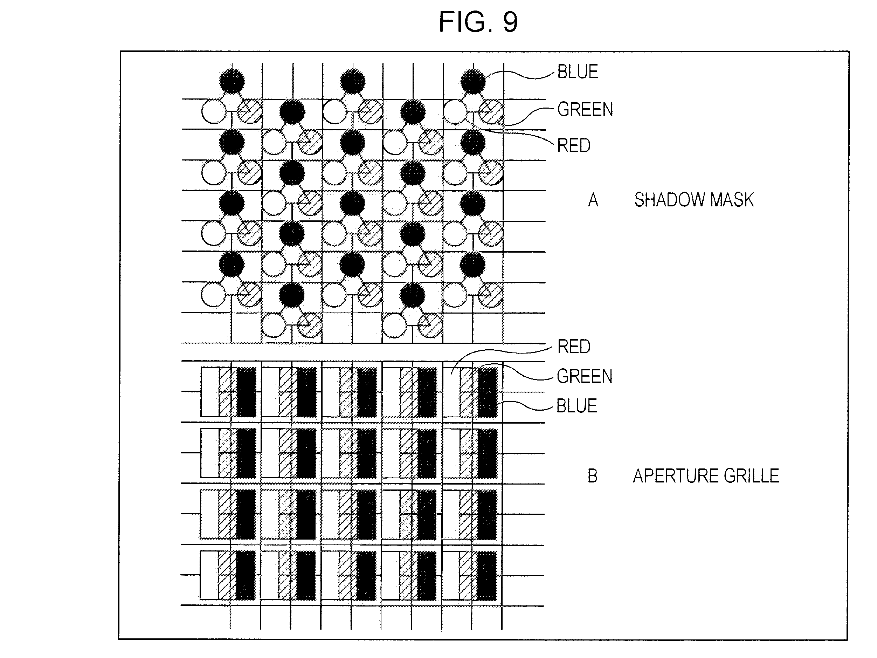

Fig. 9 illustrates the color separation mechanism.

That is, part A of Fig. 9 illustrates a shadow mask which is a color separation mechanism.

The shadow mask is provided with circular holes serving as openings, and electron beams passing through the holes are radiated on fluorescent materials.

Note that in part A of Fig. 9, a blank circle mark denotes a hole through which an electron beam is radiated on a red fluorescent material, a diagonally hatched circle mark denotes a hole through which an electron beam is radiated on a green fluorescent material, and a black circle mark denotes a hole through which an electron beam is radiated on a blue fluorescent material.

Part B of Fig. 9 illustrates an aperture grille which is another color separation mechanism.

An aperture grille is provided with slits serving as openings extending in the vertical direction, and electron beams passing through the slits are radiated on fluorescent materials.

Note that in part B of Fig. 9, a blank rectangle denotes a slit through which an electron beam is radiated on a red fluorescent material, a diagonally hatched rectangle denotes a slit through which an electron beam is radiated on a green fluorescent material, and a black rectangle denotes a slit through which an electron beam is radiated on a blue fluorescent material.

As explained in Fig. 8, the spot size of an electron beam increases as the luminance increases.

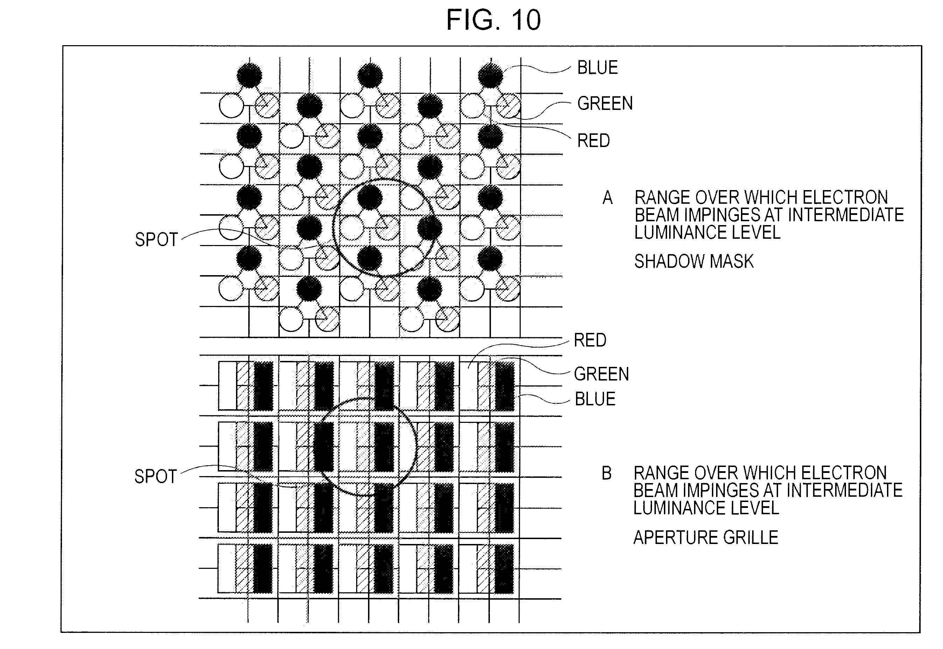

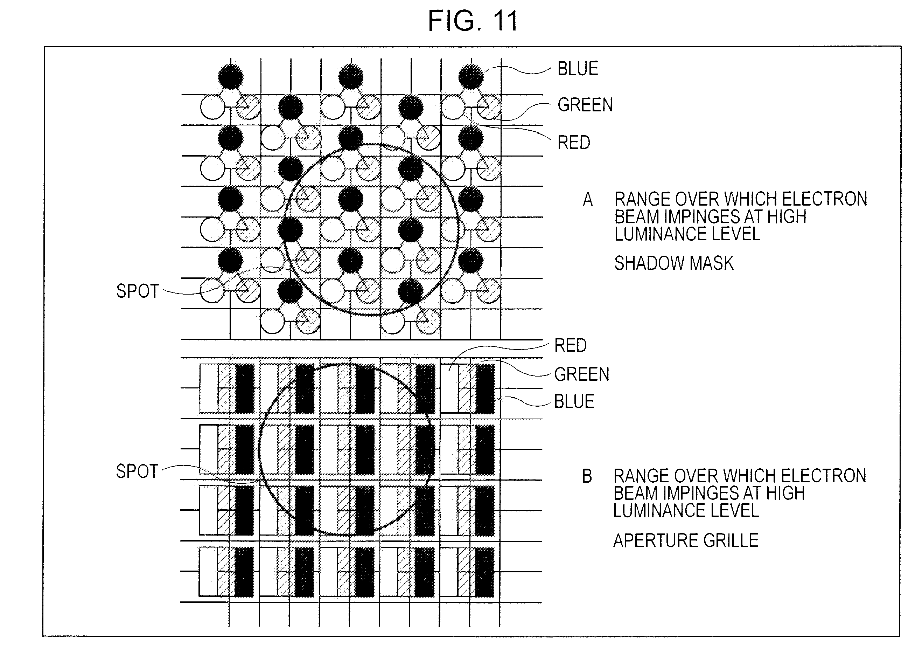

Figs. 10 and 11 schematically illustrate a spot of an electron beam formed on the color separation mechanisms in a case where the luminance level is about intermediate and a spot of an electron beam formed on the color separation mechanisms in a case where the luminance level is high, respectively.

Note that parts A of Figs. 10 and 11 illustrate, in a case where the color separation mechanism is a shadow mask, a spot of an electron beam formed on the shadow mask, and parts B of Figs. 10 and 11 illustrate, in a case where the color separation mechanism is an aperture grille, a spot of an electron beam formed on the aperture grille.

As the luminance increases, the intensity of the center portion of (the spot of) the electron beam increases, and accordingly the intensity of a portion around the electron beam also increases. Thus, the spot size of the spot of the electron beam formed on the color separation mechanism is increased. Consequently, the electron beam is radiated not only on the fluorescent material corresponding to the pixel of interest (the pixel corresponding to the fluorescent material to be irradiated with the electron beam) but also on the fluorescent materials corresponding to pixels surrounding the pixel of interest.

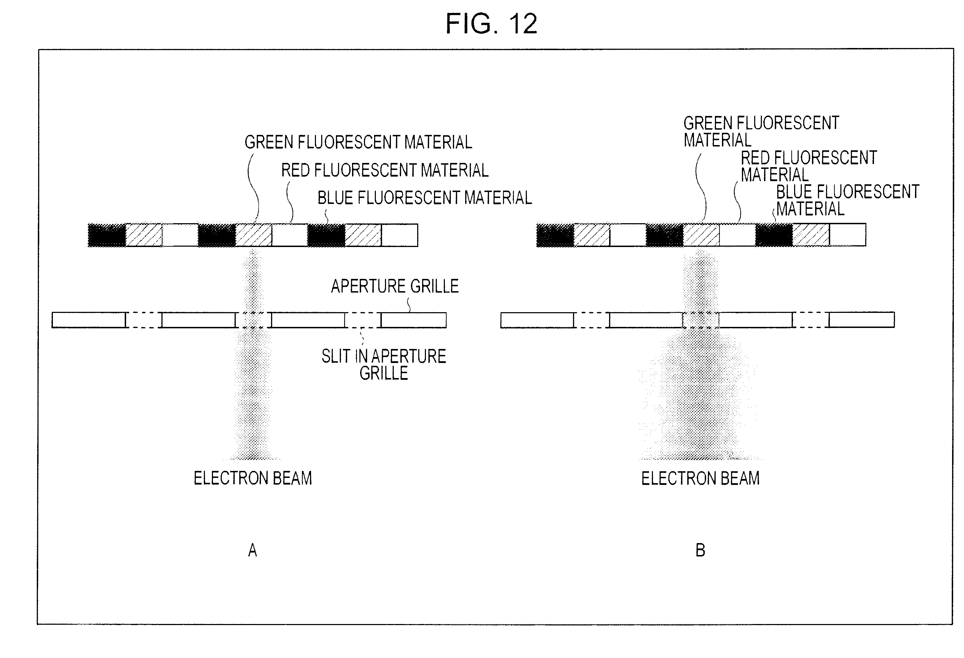

Fig. 12 is a cross-sectional view illustrating a manner in which an electron beam is radiated in a case where an aperture grille is adopted as a color separation mechanism.

That is, part A of Fig. 12 illustrates a manner in which an electron beam is radiated in a case where the beam current has a first current value, and part B of Fig. 12 illustrates a manner in which an electron beam is radiated in a case where the beam current has a second current value larger than the first current value.

In Fig. 12, a pixel corresponding to a green fluorescent material is set as a pixel of interest. In a case where the beam current has the first current value, as illustrate in part A of Fig. 12, the electron beam has a spot size which falls within a range between adjacent slits, and is radiated only on the fluorescent material corresponding to the pixel of interest and is shut out so as not to be further radiated on any other fluorescent material.

On the other hand, in a case where the beam current has the second current value, as illustrated in part B of Fig. 12, the electron beam has a spot size which falls outside a range between adjacent slits, and is also radiated on other fluorescent materials as well as the fluorescent material corresponding to the pixel of interest.

That is, in a case where the beam current has the second current value, the spot size of the electron beam becomes large enough to include other slits as well as the slit for the fluorescent material corresponding to the pixel of interest, and, consequently, the electron beam passes through the other slits and is also radiated on the fluorescent materials other than the fluorescent material corresponding to the pixel of interest.

Note that as illustrated in part B of Fig. 12, the beam current in a case where an electron beam also passes through slits other than the slit for the fluorescent material corresponding to the pixel of interest is determined based on the relationship between the spot size of the electron beam and the slit width of slits in the aperture grille.

In the EB emulation process, as above, the influence of an image caused by radiating an electron beam not only on the fluorescent material corresponding to the pixel of interest but also on other fluorescent materials is reflected in the image signal.

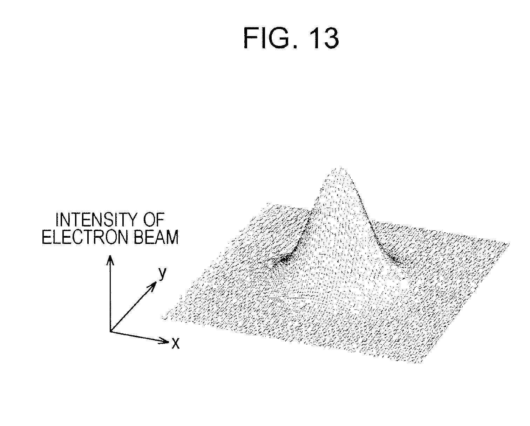

Here, Fig. 13 illustrates an intensity distribution of electron beams, which is approximated by two-dimensional normal distribution (Gaussian distribution).

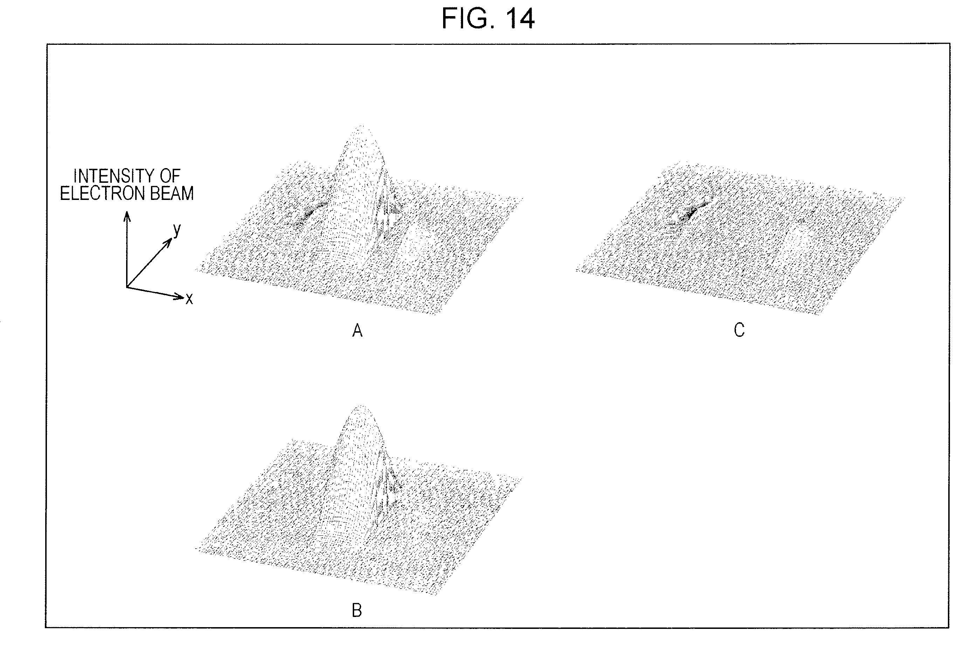

Fig. 14 illustrates an intensity distribution of electron beams passing through slits in the aperture grille among the electron beams of Fig. 13.

That is, part A of Fig. 14 illustrates an intensity distribution of the electron beams passing through the slit for the fluorescent material corresponding to the pixel of interest and the electron beams passing through left and right slits adjacent to the slit.

A majority portion of electron beams passes through the slit for the fluorescent material corresponding to the pixel of interest while a portion of the remainder of the electron beams passes through a left slit adjacent left and a right slit adjacent right to the slit for the fluorescent material corresponding to the pixel of interest. The electron beams passing therethrough have the influence on the display of the pixel corresponding to the fluorescent material of the left slit and the pixel corresponding to the fluorescent material of the right slit.

Note that part B of Fig. 14 illustrates an intensity distribution of the electron beams passing through the slit for the fluorescent material corresponding to the pixel of interest within the intensity distribution of the electron beams illustrated in part A of Fig. 14, and part C of Fig. 14 illustrates an intensity distribution of the electron beams passing through the left and right slits.

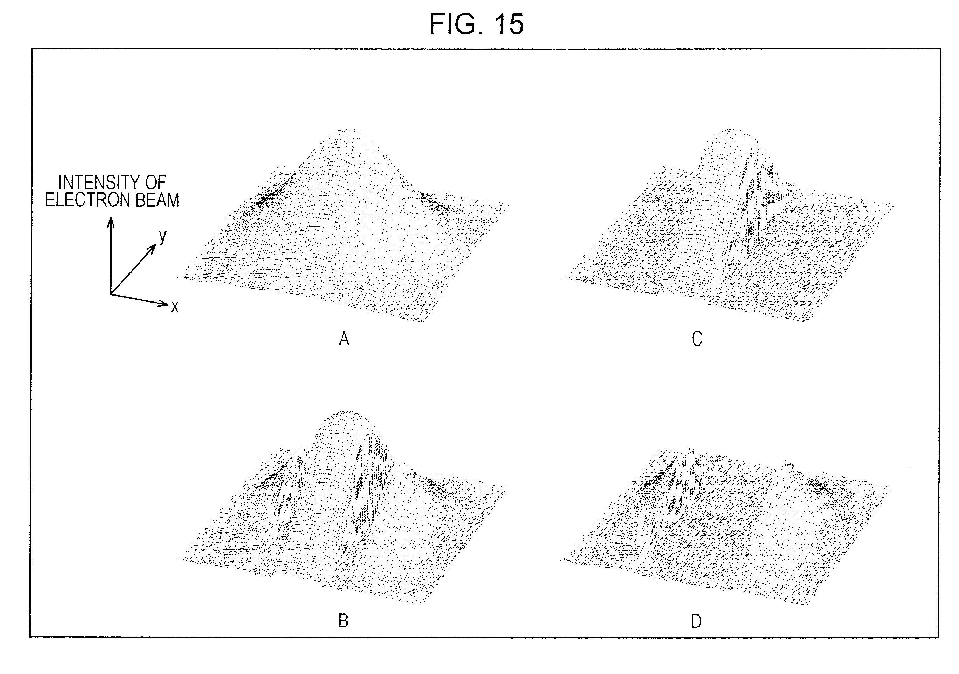

Fig. 15 illustrates an intensity distribution of electron beams having a higher intensity than that in the case of Fig. 13, and an intensity distribution of the electron beams passing through the slits in the aperture grille among the electron beams.

That is, part A of Fig. 15 illustrates an intensity distribution of electron beams having a higher intensity than that in the case of Fig. 13.

The electron beams of part A of Fig. 15 have a spot size (range having an intensity greater than or equal to a predetermined value) larger than the electron beams of Fig. 13.

Part B of Fig. 15 illustrates an intensity distribution of the electron beams passing through the slits in the aperture grille among the electron beams of part A of Fig. 15.

In part B of Fig. 15, the electron beams passing through the left and right slits have a higher intensity than those in the case of Fig. 14, and therefore have a larger influence on the display of the pixel corresponding to the fluorescent material of the left slit and the pixel corresponding to the fluorescent material of the right slit.

Note that part C of Fig. 15 illustrates, within the intensity distribution of the electron beams illustrated in part B of Fig. 15, an intensity distribution of the electron beams passing through the slit for the fluorescent material corresponding to the pixel of interest, and part D of Fig. 15 illustrates an intensity distribution of the electron beams passing through the left and right slits.

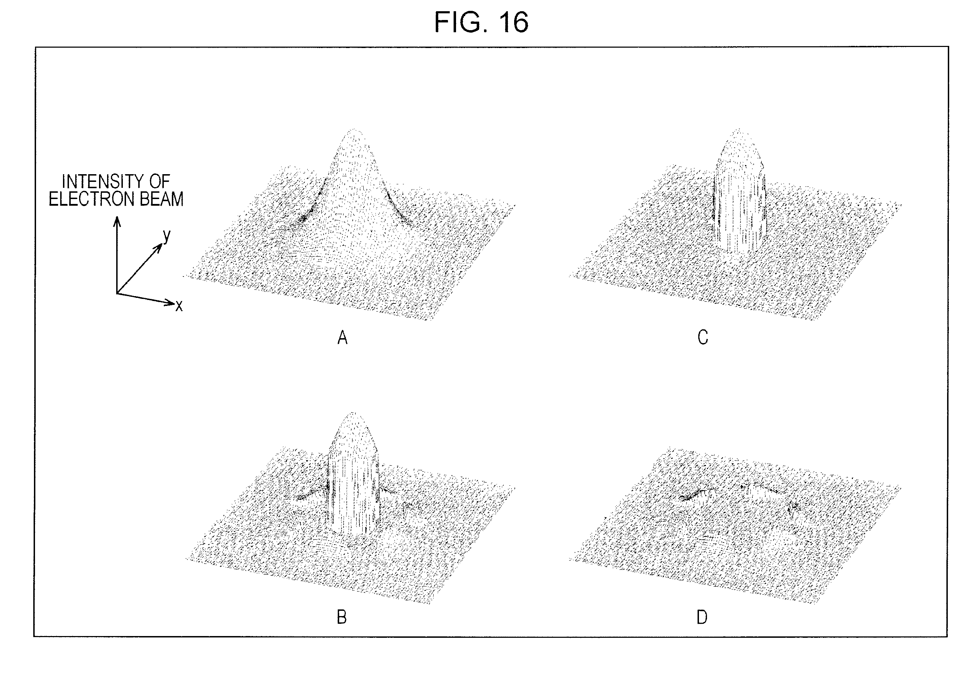

Fig. 16 illustrates the intensity distribution of the electron beams illustrated in Fig. 13 and an intensity distribution of the electron beams passing through the slits in the shadow mask among the electron beams.

That is, part A of Fig. 16 illustrates the intensity distribution of electron beams which is the same as that of Fig. 13.

Part B of Fig. 16 illustrates an intensity distribution of the electron beams passing through the holes in the shadow mask among the electron beams of part A of Fig. 16.

That is, part of B of Fig. 16 illustrates an intensity distribution of the electron beams passing through the hole in the fluorescent material corresponding to the pixel of interest and the electron beams passing through holes (neighboring holes) neighboring this hole.

Part C of Fig. 16 illustrates, within the intensity distributions of the electron beams illustrated in part B of Fig. 16, an intensity distribution of the electron beams passing through the hole in the fluorescent material corresponding to the pixel of interest, and part D of Fig. 16 illustrates an intensity distribution of the electron beams passing through the neighboring holes.

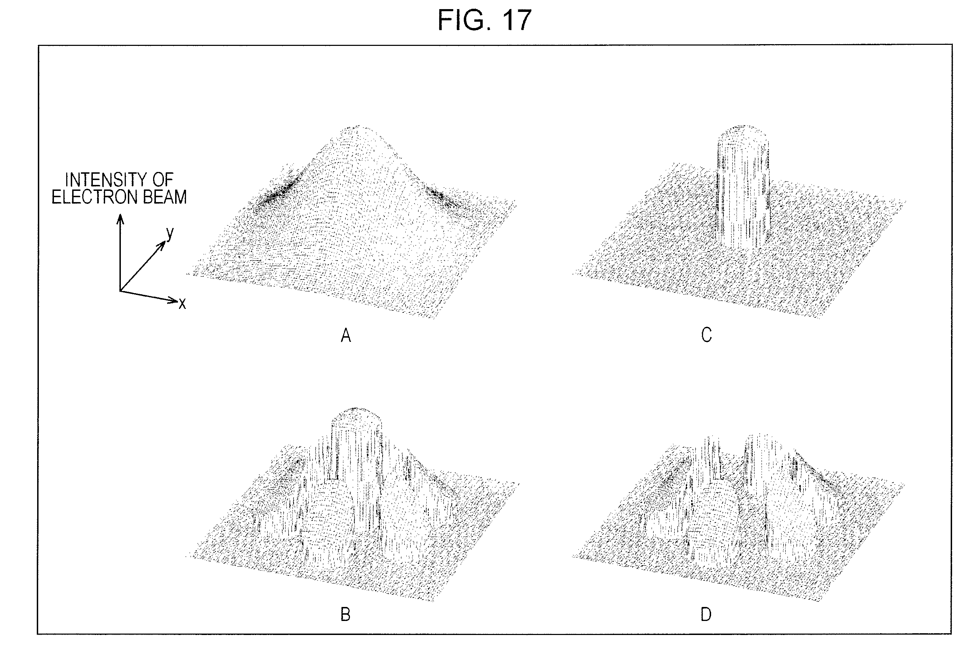

Fig. 17 illustrates an intensity distribution of electron beams having a higher intensity than that in the case of Fig. 16, and an intensity distribution of the electron beams passing through holes in the shadow mask among the electron beams.

That is, part A of Fig. 17 illustrates an intensity distribution of electron beams having a higher intensity than that in the case of Fig. 16.

The electron beams of part of A Fig. 17 have a larger spot size (range having an intensity greater than or equal to a predetermined value) than the electron beams of part A of Fig. 16.

Part B of Fig. 17 illustrates an intensity distribution of electron beams passing through holes in the shadow mask among the electron beams of part A of Fig. 17.

In part B of Fig. 17, the intensity of the electron beams passing through the neighboring holes is higher than that in the case of part B of Fig. 16, and therefore has a larger influence on the display of the pixels corresponding to the fluorescent materials of the neighboring holes compared with the case of part B of Fig. 16.

Part C of Fig. 17 illustrates, within the intensity distribution of the electron beams illustrated in part B of Fig. 17, an intensity distribution of the electron beams passing through the hole in the fluorescent material corresponding to the pixel of interest, and part D of Fig. 17 illustrates an intensity distribution of the electron beams passing through the neighboring holes.

Note that in Figs. 13 to 17, for easy understanding of the spread of a spot of an electron beam, the scale along the height direction representing the intensity of the electron beam is compressed as compared with the scale along the x and y directions representing the position.

Incidentally, the area of a certain section of the one-dimensional normal distribution (normal distribution in one dimension) can be determined by integrating the probability density function f(x) in Equation (1) representing the one-dimensional normal distribution over the section of which the area is to be determined.

[Math. 1]

$$f(x) = \frac{1}{\sqrt{2\pi}\sigma} \exp\left(-\frac{(x-\mu)^2}{2\sigma^2}\right)$$

$$\cdots (1)$$

Here, in Equation (1), $\mu$ represents the average value and $\sigma^2$ represents variance.

As described above, in a case where the distribution of the intensity of an electron beam is approximated by the two-dimensional normal distribution (normal distribution in two dimensions), the intensity of the electron beam in a certain range can be determined by integrating the probability density function f(x, y) in Equation (2) representing the two-dimensional normal distribution over the range for which the intensity is to be determined.

[Math. 2]

$$f(x, y) = \frac{1}{2\pi\sigma_x\sigma_y\sqrt{1-\rho_{xy}^2}} \exp\left[-\frac{1}{2(1-\rho_{xy}^2)}\left\{\frac{(x-\mu_x)^2}{\sigma_x^2}\right.\right.$$

$$\left.\left.+\frac{(y-\mu_y)^2}{\sigma_y^2}-\frac{2\rho_{xy}(x-\mu_x)(y-\mu_y)}{\sigma_x\sigma_y}\right\}\right]$$

$$\cdots(2)$$

Here, in Equation (2), $\mu_x$ represents the average value in the x direction and $\mu_y$ represents the average value in the y direction. Further, $\sigma_x^2$ represents the variance in the x direction and $\sigma_y^2$ represents the variance in the x direction. $\rho_{xy}$ represents the correlation coefficient in the x and y directions (the value obtained by dividing the covariance in the x and y directions by the product of the standard deviation $\sigma_x$ in the x direction and the standard deviation $\sigma_y$ in the y direction).

The average value (average vector) ($\mu_x$, $\mu_y$) ideally represents the position (x, y) of the center of the electron beam. Now, for ease of explanation, if it is assumed that the position (x, y) of the center of the electron beam is (0, 0) (origin), the average values $\mu_x$ and $\mu_y$ become 0.

Further, in a CRT display apparatus, since an electron gun, a cathode, and the like are designed so that a spot of an electron beam can be round, the correlation coefficient $\rho_{xy}$ is set to 0.

Now, if it is assumed that the color separation mechanism is an aperture grille, the probability density function f(x, y) in Equation (2) in which the average values $\mu_x$ and $\mu_y$ and the correlation coefficient $\rho_{xy}$ are set to 0 is integrated over the range of a slit. Thereby, the intensity (amount) of the electron beam passing through the slit can be determined.

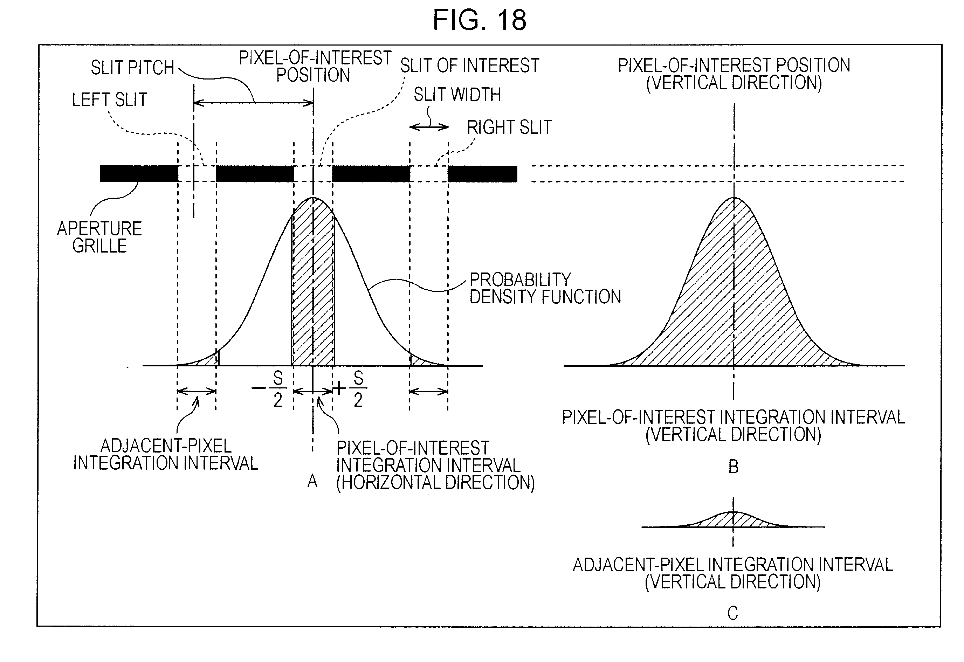

That is, Fig. 18 is a diagram explaining the integration for determining the intensity of an electron beam passing through a slit.

Part A of Fig. 18 illustrates the interval of integration in the x direction which is a horizontal direction.

The intensity of an electron beam passing through a slit in a fluorescent material corresponding to a pixel of interest (a slit of interest) can be determined by integrating the probability density function f(x, y) over the range from -S/2 to +S/2, where S denotes the slit width of a slit in the aperture grille in the x direction.

Further, the intensity of the electron beam passing through the left slit can be determined by, for the x direction, integrating the probability density function f(x, y) over the slit width of the left slit, and the intensity of the electron beam passing through the right slit can be determined by, for the x direction, integrating the probability density function f(x, y) over the slit width of the right slit.

Parts A and C of Fig. 18 illustrate the interval of integration in the y direction which is a vertical direction.

The intensity of the electron beam passing through the slit of interest can be determined by, for the y direction, as illustrated in part B of Fig. 18, integrating the probability density function f(x, y) over the range from -∞ to +∞.

The intensities of the electron beams passing through the left and right slits can also be determined by, for the y direction, as illustrated in part C of Fig. 18, integrating the probability density function f(x, y) over the range from -∞ to +∞.

On the other hand, the overall intensity of the electron beams can be determined by, for both the x and y directions, integrating the probability density function f(x, y) over the range from -∞ to +∞, the value of which is now denoted by $P_0$.

Further, it is assumed that the intensity of the electron beam passing through the slit of interest is represented by $P_1$ and the intensities of the electron beams passing through the left and right slits are represented by $P_L$ and $P_R$, respectively.

In this case, only the intensity $P_1$ within the overall intensity $P_0$ of the electron beams has the influence on the display of the pixel of interest. Due to the display of this pixel of interest, within the overall intensity $P_0$ of the electron beams, the intensity $P_L$ has the influence on the display of the pixel (left pixel) corresponding to the fluorescent material of the left slit, and the intensity $P_R$ influences the display of the pixel (right pixel) corresponding to the fluorescent material of the left slit.

That is, based on the overall intensity $P_0$ of the electron beams, $P_1/P_0$ of the intensity of the electron beam has the influence on the display of the pixel of interest. Furthermore, $P_L/P_0$ of the intensity of the electron beam has the influence on the display of the left pixel, and $P_R/P_0$ of the intensity of the electron beam has the influence on the display of the right pixel.

Therefore, based on the display of the pixel of interest, the display of the pixel of interest has the influence on the display of the left pixel only by $P_L/P_0/(P_1/P_0)$, and has the influence on the display of the right pixel only by $P_R/P_0/(P_1/P_0)$.

In the EB emulation process, for the left pixel, in order to reflect the influence of the display of the pixel of interest, the pixel value of the left pixel is multiplied by the amount of influence $P_L/P_0/(P_1/P_0)$ of the display of the pixel of interest as an EB coefficient used for the EB emulation process, and a resulting multiplication value is added to the (original) pixel value of the left pixel. Further, in the EB emulation process, a similar process is performed using, as an EB coefficient, the amount of influence of the display of pixels surrounding the left pixel, which has the influence on the display of the left pixel, thereby determining the pixel value of the left pixel, which takes the influence caused by the electron beam spreading out at the time of display of the pixels surrounding the left pixel and impinging on the fluorescent material of the left pixel into account.

Also for the right pixel, likewise, the pixel value of the right pixel, which takes the influence caused by the electron beam spreading out at the time of display of the pixels surrounding the right element and impinging on the fluorescent material of the right pixel into account, is determined.

Note that also in a case where the color separation mechanism is a shadow mask, the EB coefficient used for the EB emulation process can be determined in a manner similar to that in the case of an aperture grille. With regard to a shadow mask, however, the complexity of integration is increased as compared with the case of an aperture grille. With regard to a shadow mask, it is easier to determine the EB coefficient using Monte Carlo Method or the like, from the position of a hole in the shadow mask and the radius of the hole, rather than using the integration described above.

As above, it is theoretically possible to determine the EB coefficient by calculation. However, as illustrated in Fig. 8, the spot size of an electron beam changes depending on the beam current. Therefore, in order to determine the EB coefficient, it is necessary to change the variances $\sigma_x^2$ and $\sigma_y^2$ of the probability density function $f(x, y)$ in Equation (2), which approximates the intensity distribution of the electron beams, for every current value of the beam current.

Further, in the case described above, it is a reasonable premise that an electron beam is incident on a color separation mechanism (an aperture grille and a shadow mask) at a right angle. In actuality, however, the angle at which an electron beam is incident on a color separation mechanism becomes shallow as the incidence occurs apart from the center of the display screen.

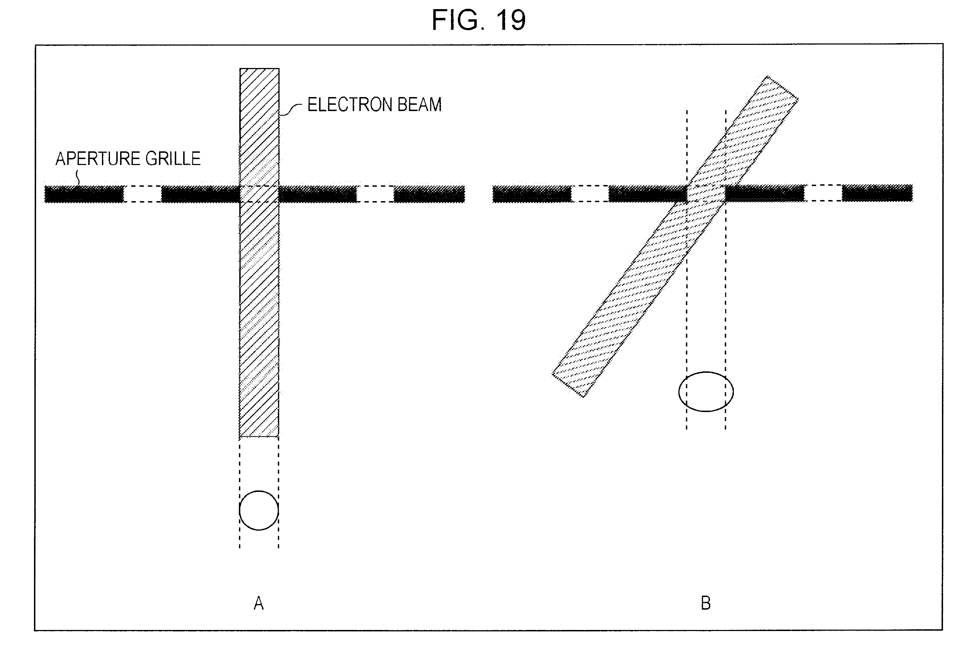

That is, Fig. 19 illustrates a manner in which an electron beam is incident on an aperture grille serving as a color separation mechanism.

Part A of Fig. 19 illustrates a manner in which an electron beam is incident on the aperture grille in the vicinity of the center of the display screen.

As illustrated in part A of Fig. 19, in the vicinity of the center of the display screen, an electron beam is incident perpendicular to the aperture grille.

Part B of Fig. 19 illustrates a manner in which an electron beam is incident on the aperture grille at a position apart from the center of the display screen

As illustrated in part B of Fig. 19, at a position apart from the center of the display screen, an electron beam is incident on the aperture grille at an angle inclined with respect to the perpendicular.

In a case where, as illustrated in part B of Fig. 19, an electron beam is incident on the aperture grille at an angle inclined with respect to the perpendicular, the intensity distribution of electron beams is far from the shape of the probability density function $f(x, y)$ in Equation (2). Thus, if the EB coefficient is determined based on the premise that an electron beam is incident perpendicular to the aperture grille, the accuracy of the EB coefficient is degraded.

As above, it is desirable that the EB coefficient be determined not only by calculation but also using an experiment.

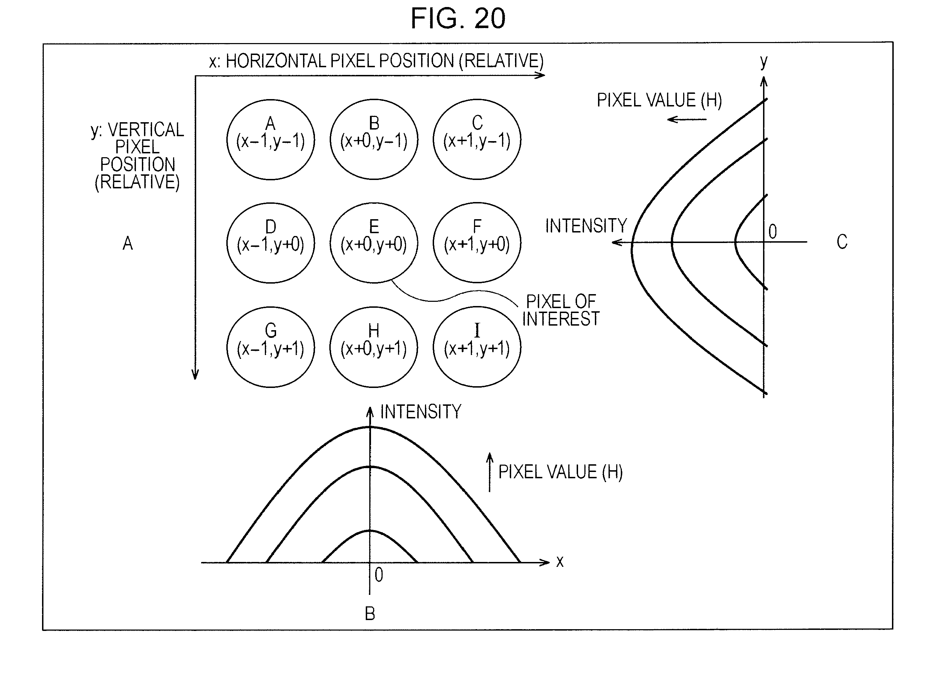

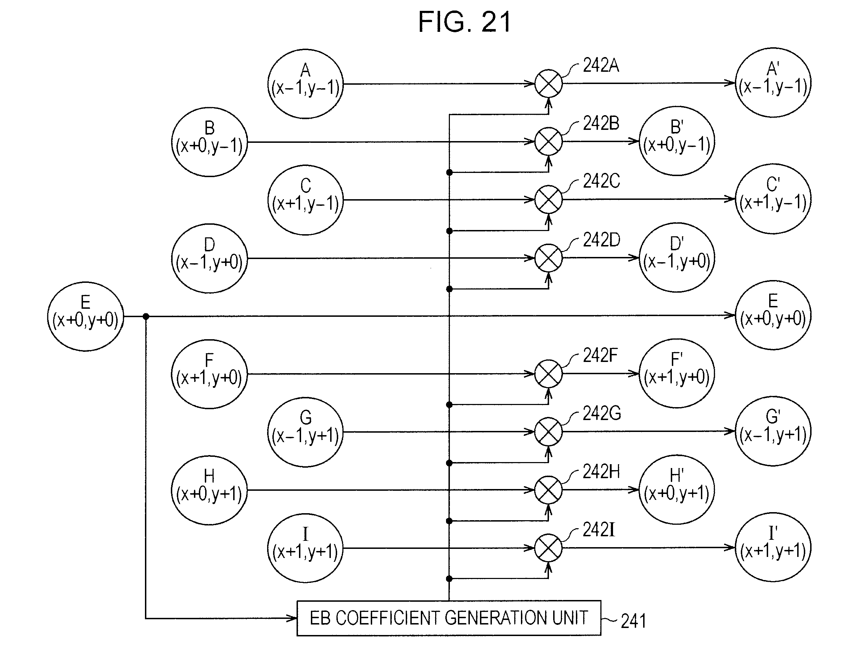

Next, the EB emulation process performed in the EB processing unit 220 of Fig. 5 will further be explained with reference to Figs. 20 and 21.

Fig. 20 illustrates pixels and an intensity distribution of electron beams.

That is, part A of Fig. 20 illustrates $3 \times 3$, i.e., nine, pixels A, B, C, D, F, G, H, and I given in horizontal and vertical order, centered on a pixel E.

Now, it is assumed that in part A of Fig. 20, attention is directed to the pixel E as a pixel of interest. Further, the horizontal direction is set as the x direction and the vertical direction is set as the y direction, and that, based on the position (x, y) of the pixel of interest E as a reference, the positions of the other pixels A to D and F to I are represented.

In this case, if it is assumed that the distance between pixels is 1, the position of the pixel A is set to (x-1, y-1), the position of the pixel B to (x, y-1), the position of the pixel C to (x+1, y-1), the position of the pixel D to (x-1, y), the position of the pixel F to (x+1, y), the position of the pixel G to (x-1, y+1), the position of the pixel H to (x, y+1), and the position of the pixel I to (x+1, y+1).

Here, the pixel A is also referred to as the pixel A(x-1, y-1) also using its position (x-1, y-1), and the pixel value of the pixel A(x-1, y-1) is also referred to as a pixel value A. Similarity applies to the other pixels B to I.

Parts B and C of Fig. 20 schematically illustrate an intensity distribution of electron beams when the pixel of interest E(x, y) is displayed on a CRT display apparatus.

That is, part B of Fig. 20 represents the distribution in the x direction of the intensity of the electron beams when the pixel of interest E(x, y) is displayed, and part C of Fig. 20 represents the distribution in the y direction of the intensity of the electron beams when the pixel of interest E(x, y) is displayed.

As the pixel value E of the pixel of interest E(x, y) increases, as illustrated in parts B and C of Fig. 20, the electron beams more spread out and have the influence on the display of the other pixels A(x-1, y-1) to D(x-1, y) and F (x+1, y) to I(x+1, y+1).

Thus, the EB processing unit 220 of Fig. 5 multiplies an EB coefficient representing the degree to which the electron beams when displaying the pixel of interest E(x, y) have the influence on the display of the other pixels A(x-1, y-1) to D(x-1, y) and F(x+1, y) to I(x+1, y+1) by the pixel values A to D and F to I of the other pixels A(x-1, y-1) to D(x-1, y) and F(x+1, y) to I(x+1, y+1) to thereby determine the amount of influence of the electron beams on the display of the other pixels A(x-1, y-1) to D(x-1, y) and F(x+1, y) to I(x+1, y+1) when displaying the pixel of interest E(x, y), and decides the pixel values, obtained after the EB emulation process, of the other pixels A(x-1, y-1) to D(x-1, y) and F(x+1, y) to I(x+1, y+1) by taking the amount of influence into account.

Fig. 21 illustrates an example structure of a circuit that determines the amount of influence of the electron beams (hereinafter referred to as an amount of EB influence, as necessary) on the display of the other pixels A(x-1, y-1) to D(x-1, y) and F(x+1, y) to I(x+1, y+1) when displaying the pixel of interest E(x, y).

The pixel value A is supplied to a computation unit 242A, the pixel value B to a computation unit 242B, the pixel value C to a computation unit 242C, the pixel value D to a computation unit 242D, the pixel value E to an EB coefficient generation unit 241, the pixel value F to a computation unit 242F, the pixel value G to a computation unit 242G, the pixel value H to a computation unit 242H, and the pixel value I to a computation unit 242I.

The EB coefficient generation unit 241 generates EB coefficients $A_{EB}$, $B_{FB}$, $C_{EB}$, $D_{EB}$, $F_{EB}$, $G_{EB}$, $H_{EB}$, and $I_{EB}$ representing the degree to which the electron beams when displaying the pixel of interest E(x, y) have the influence on the display of the other pixels A(x-1, y-1) to D(x-1, y) and F(x+1, y) to I(x+1, y+1) on the basis of the pixel value E, and supplies the EB coefficients $A_{EB}$, $B_{EB}$, $C_{EB}$, $D_{EB}$, $F_{EB}$, $G_{EB}$, $H_{EB}$, and $I_{EB}$ to the computation units 242A, 242B, 242C, 242D, 242F, 242G, 242H, and 242I, respectively.

The computation units 242A to 242D and 242F to 242I multiply the pixel values A to D and F to I supplied thereto with the EB coefficients $A_{EB}$ to $D_{EB}$ and $F_{EB}$ to $I_{EB}$ from the EB coefficient generation unit 241, respectively, and outputs resulting values A' to D' and F' to I' as an amount of EB influence.

The pixel value E is directly output and is added to the amount of EB influence of each of the electron beams on the display of the pixel of interest E(x, y) when displaying the other pixels A(x-1, y-1) to D(x-1, y) and F(x+1, y) to I(x+1, y+1), and the resulting addition value is set as a pixel value, obtained after the EB emulation process, of the pixel of interest E(x, y).

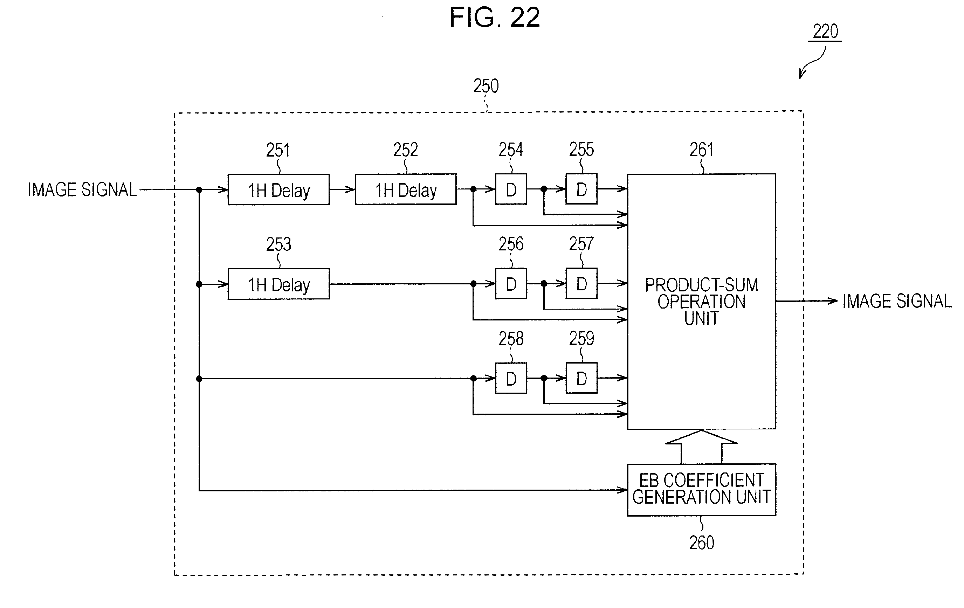

Fig. 22 is a block diagram illustrating an example structure of the EB processing unit 220 of Fig. 5.

In Fig. 22, the EB processing unit 220 is constructed from an EB function unit 250, and the EB function unit 250 is constructed from delay units 251 to 259, an EB coefficient generation unit 260, and a product-sum operation unit 261.

The EB function unit 250 determines the pixel value, obtained after the EB emulation process, of the pixel E(x, y) by assuming that, for example, as illustrated in Fig. 20, the electron beams when displaying the display of the pixel E(x, y) have the influence on the display of the pixels A(x-1, y-1) to D(x-1, y) and F(x+1, y) to I(x+1, y+1) adjacent to the pixel E(x, y), that is, by assuming that the pixel E(x, y) has an amount of EB influence from each of the pixels A(x-1, y-1) to D(x-1, y) and F(x+1, y) to I(x+1, y+1) adjacent to the pixel E(x, y).

That is, the EB function unit 250 is supplied with the image signal from the luminance correction unit 210 (Fig. 5).

In the EB function unit 250, the pixel values of pixels constituting the image signal from the luminance correction unit 210 are supplied to the delay units 251, 253, and 258, the EB coefficient generation unit 260, and the product-sum operation unit 261 in raster scan order.

The delay unit 251 delays the pixel value from the luminance correction unit 210 by an amount corresponding to one line (horizontal line), and supplies a result to the delay unit 252. The delay unit 252 delays the pixel value from the delay unit 251 by an amount corresponding to one line, and supplies a result to the delay unit 254 and the product-sum operation unit 261.

The delay unit 254 delays the pixel value from the delay unit 252 by an amount corresponding to one pixel, and supplies a result to the delay unit 255 and the product-sum operation unit 261. The delay unit 255 delays the pixel value from the delay unit 254 by an amount corresponding to one pixel, and supplies a result to the product-sum operation unit 261.

The delay unit 253 delays the pixel value from the luminance correction unit 210 by an amount corresponding to one line, and supplies a result to the delay unit 256 and the product-sum operation unit 261. The delay unit 256 delays the pixel value from the delay unit 253 by an amount corresponding to one pixel, and supplies a result to the delay unit 257 and the product-sum operation unit 261. The delay unit 257 delays the pixel value from the delay unit 256 by an amount corresponding to one pixel, and supplies a result to the product-sum operation unit 261.

The delay unit 258 delays the pixel value from the luminance correction unit 210 by an amount corresponding to one pixel, and supplies a result to the delay unit 259 and the product-sum operation unit 261. The delay unit 259 delays the pixel value from the delay unit 258 by an amount corresponding to one pixel, and supplies a result to the product-sum operation unit 261.

The EB coefficient generation unit 260 generates an EB coefficient as described above for determining the amount of EB influence of this pixel value on adjacent pixel values on the basis of the pixel value from the luminance correction unit 210, and supplies the EB coefficient to the product-sum operation unit 261.

The product-sum operation unit 261 multiplies each of a total of eight pixel values, namely, the pixel value from the luminance correction unit 210 and the pixel values individually from the delay units 252 to 255 and 257 to 259, with the EB coefficient from the EB coefficient generation unit 260 to thereby determine the amount of EB influence on the pixel value delayed by the delay unit 256 from the eight pixel values, and adds this amount of EB influence to the pixel value from the delay unit 256, thereby determining and outputting the pixel value obtained after the EB emulation process for the pixel value from the delay unit 256.

Therefore, for example, if it is assumed that the pixel values A to I illustrated in Fig. 20 are supplied to the EB function unit 250 in raster scan order and that the pixel value I is now supplied to the EB function unit 250, the output of the delay unit 255 becomes equal to the pixel value A, the output of the delay unit 254 to the pixel value B, the output of the delay unit 252 to the pixel value C, the output of the delay unit 257 to the pixel value D, the output of the delay unit 256 to the pixel value E, the output of the delay unit 253 to the pixel value F, the output of the delay unit 259 to the pixel value G, and the output of the delay unit 258 to the pixel value H, which are supplied to the product-sum operation unit 261.

Further, the EB coefficient generation unit 260 and the product-sum operation unit 261 are supplied with the pixel value I supplied to the EB function unit 250.

Since the pixel values A to H have been supplied to the EB coefficient generation unit 260 before the pixel value I is supplied, in the EB coefficient generation unit 260, an EB coefficient for determining the amount of EB influence of each of the pixel values A to I on the adjacent pixel value has been generated and supplied to the product-sum operation unit 261.

The product-sum operation unit 261 multiplies the pixel value E from the delay unit 256 and each of EB coefficients from the EB coefficient generation unit 260 for determining the amount of EB influence of each of the pixel values A to D and F to I on the pixel value E to thereby determine the amount of EB influence of each of the pixel values A to D and F to I on the pixel value E, and adds it to the pixel value E from the delay unit 256. The resulting addition value is output as the pixel value obtained after the EB emulation process for the pixel value E from the delay unit 256.

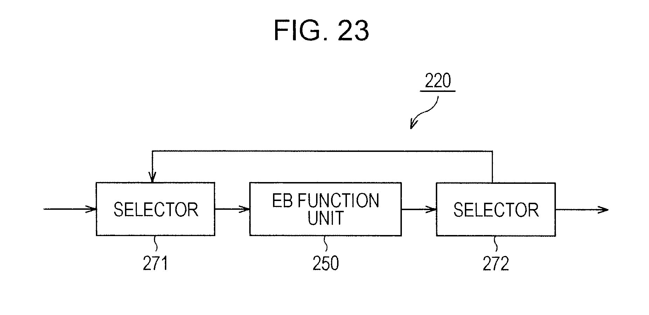

Next, Fig. 23 illustrates another example structure of the EB processing unit 220 of Fig. 5.

Note that in the figure, portions corresponding to those in the case of Fig. 22 are designated by the same numerals and an explanation thereof is omitted as necessary.

That is, the EB processing unit 220 of Fig. 23 is common to that in the case of Fig. 22 in that it has an EB function unit 250, and is different from that in the case of Fig. 22 in that it has further selectors 271 and 272.

In the EB processing unit 220 of Fig. 23, the image signal from the luminance correction unit 210 (Fig. 5) is supplied to the selector 271.

Further, the selector 271 is also supplied with an image signal from the selector 272.

The selector 271 selects either the image signal from the luminance correction unit 210 or the image signal from the selector 272, and supplies the selected one to the EB function unit 250.

The selector 272 is supplied with the image signal obtained after the EB emulation process from the EB function unit 250.

The selector 272 outputs the image signal from the EB function unit 250 as a final image signal obtained after the EB emulation process or supplies it to the selector 271.

In the EB processing unit 220 constructed as above, the selector 271 first selects the image signal the from the luminance correction unit 210, and supplies it to the EB function unit 250.

The EB function unit 250 subjects the image signal from the selector 271 to an EB emulation process, and supplies a result to the selector 272.

The selector 272 supplies the image signal from the EB function unit 250 to the selector 271.

The selector 271 selects the image signal from the selector 272, and supplies it to the EB function unit 250.

As above, in the EB function unit 250, after the image signal from the luminance correction unit 210 is repeatedly subjected to the EB emulation process a predetermined number of times, the selector 272 outputs the image signal from the EB function unit 250 as a final image signal obtained after the EB emulation process.

As above, the EB emulation process can be recursively performed.

Note in Fig. 22, for ease of explanation, the electron beams when displaying the pixel $E(x, y)$ have the influence only on the display of the pixels $A(x-1, y-1)$ to $D(x-1, y)$ and $F(x+1, y)$ to $I(x+1, y+1)$ adjacent to this pixel $E(x, y)$. However, the range of pixels over which the electron beams when displaying the pixel $E(x, y)$ have the influence on the display varies depending on the intensity distribution of the electron beams.

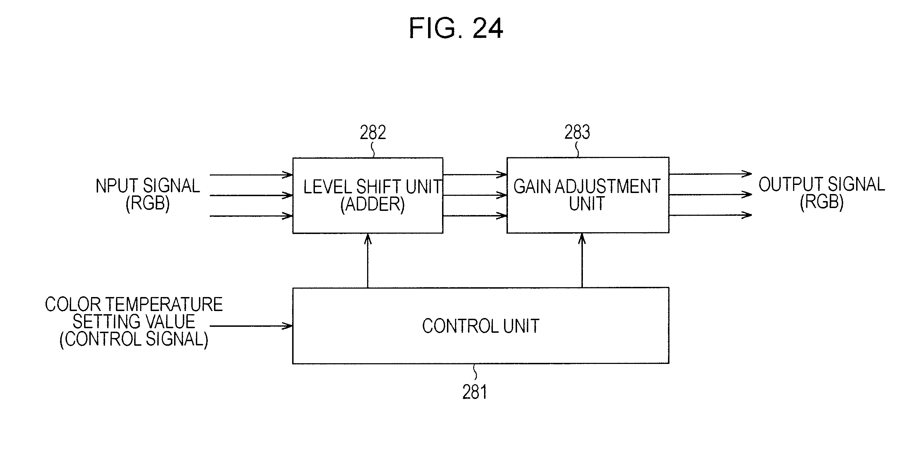

Next, Fig. 24 illustrates an example structure of a section of the CRT γ processing unit 35 of Fig. 2 that performs a color temperature compensation process.

In Fig. 24, the control signal from the display color temperature compensation control unit 40 (Fig. 2) is supplied to a control unit 281, and color signals R (Red), G (Green), and B (Blue) as the image signal from the VM processing unit 34 (Fig. 2) are supplied to a level shift unit 282.

The control unit 281 controls the level shift unit 282 and the gain adjustment unit 283 on the basis of the setting value of the color temperature represented by the control signal from the display color temperature compensation control unit 40.

The level shift unit 282 performs a shift (addition) of the level for the color signals R, G, and B from the VM processing unit 34 according to the control from the control unit 281 (in the CRT display apparatus, DC bias), and supplies resulting color signals R, G, and B to the gain adjustment unit 283.

The gain adjustment unit 283 performs adjustment of the gain of the color signals R, G, and B from the level shift unit 282 according to the control from the control unit 281, and outputs resulting color signals R, G, and B as color signals R, G, and B obtained after the color temperature compensation process.

Note that any other method, for example, the method described in Japanese Unexamined Patent Application Publication No. 08-163582 or 2002-232905, can be adopted as a method of the color temperature compensation process.

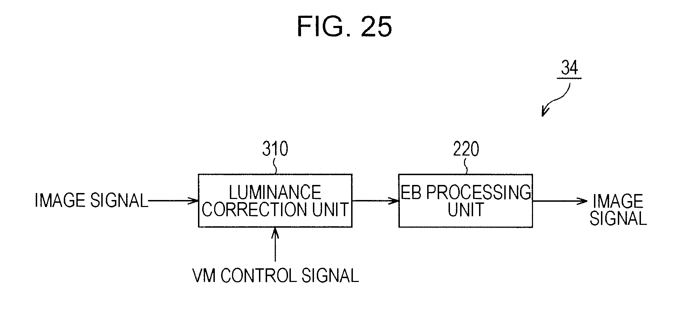

Fig. 25 illustrates another example structure of the VM processing unit 34 of Fig. 2.

Note that in the figure, portions corresponding to those of the VM processing unit 34 of Fig. 5 are designated by the same numerals and an explanation thereof is hereinafter omitted as necessary.

That is, the VM processing unit 34 of Fig. 25 is constructed in a manner similar to that of the VM processing unit 34 of Fig. 5, except that a luminance correction unit 310 is provided in place of the luminance correction unit 210 (Fig. 5).

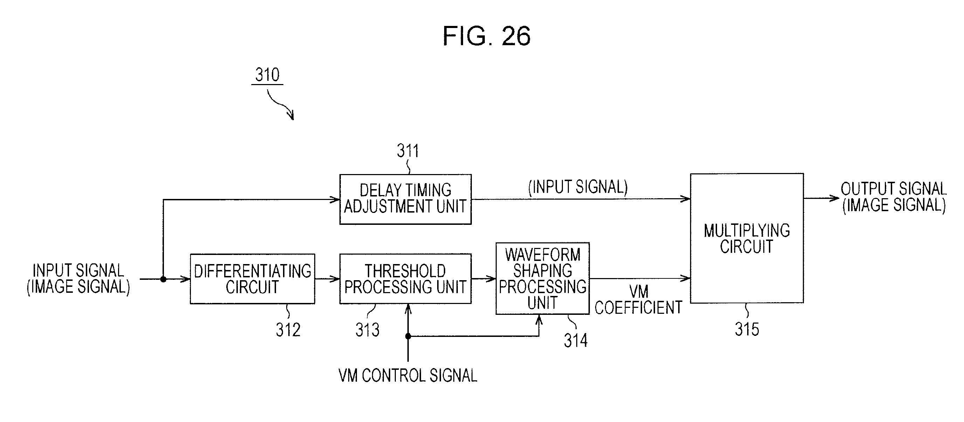

Fig. 26 illustrates an example structure of the luminance correction unit 310 of Fig. 25.

In Fig. 26, the luminance correction unit 310 is constructed from a delay timing adjustment unit 311, a differentiating circuit 312, a threshold processing unit 313, a waveform shaping processing unit 314, and a multiplying circuit 315, and performs luminance correction as emulation of a VM process (velocity modulation of an electron beam) in the CRT display apparatus, which is described in, for example, Japanese Unexamined Patent Application Publication No. 61-167280 (Japanese Examined Patent Application Publication No. 05-84706), International Publication No. WO00/010324, or the like.

That is, the luminance correction unit 310 is supplied with the image signal from the ABL processing unit 33 (Fig. 2), and this image signal is supplied to the delay timing adjustment unit 311 and the differentiating circuit 312.

The delay timing adjustment unit 311 delays the image signal from the ABL processing unit 33 by an amount of time corresponding to the amount of time required for the processes performed in the differentiating circuit 312, the threshold processing unit 313, and the waveform shaping processing unit 314, and supplies a result to the multiplying circuit 315.

On the other hand, the differentiating circuit 312 performs first-order differentiation of the image signal from the ABL processing unit 33 to thereby detect an edge portion of this image signal, and supplies the differentiated value (differentiated value of the first-order differentiation) of this edge portion to the threshold processing unit 313.

The threshold processing unit 313 compares the absolute value of the differentiated value from the differentiating circuit 312 with a predetermined threshold value, and supplies only a differentiated value of which the absolute value is greater than the predetermined threshold value to the waveform shaping processing unit 314 to limit the implementation of luminance correction for the edge portion of which the absolute value of the differentiated value is not greater than the predetermined threshold value.

The waveform shaping processing unit 314 calculates a VM coefficient having an average value of 1.0 as a VM coefficient for performing luminance correction by multiplying it with the pixel value of the edge portion on the basis of the differentiated value from the threshold processing unit 313, and supplies the VM coefficient to the multiplying circuit 315.

The multiplying circuit 315 multiplies the pixel value of the edge portion in the image signal supplied from the delay timing adjustment unit 311 with the VM coefficient supplied from the waveform shaping processing unit 314 to thereby perform luminance correction of this edge portion, and supplies a result to the EB processing unit 220 (Fig. 25).

Note that the VM coefficient to be calculated in the waveform shaping processing unit 314 can be adjusted in accordance with, for example, a user operation so as to allow the degree of the luminance correction of the edge portion to meet the user preference.

Further, each of the threshold processing unit 313 and the waveform shaping processing unit 314 sets an operation condition according to the VM control signal supplied from the VM control unit 39 (Fig. 2).

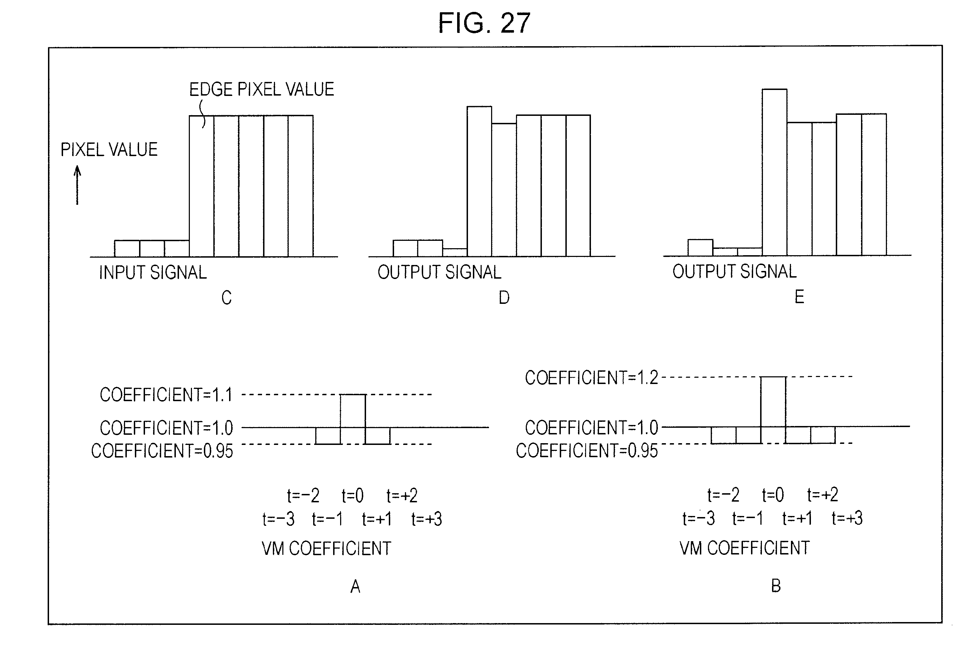

Fig. 27 illustrates an example of a VM coefficient calculated in the waveform shaping processing unit 314 and the image signals before and after the luminance correction is performed using this VM coefficient.

That is, part A of Fig. 27 illustrates a first example of a VM coefficient.

In part A of Fig. 27, a VM coefficient to be multiplied with an edge pixel value (a large pixel value among large and small pixel values constituting an edge) is set to 1.1, and VM coefficients to be individually multiplied with the left and right pixel values adjacent to the edge pixel value are 0.95.

Part B of Fig. 27 illustrates a second example of a VM coefficient.

In part B of Fig. 27, a VM coefficient to be multiplied with the edge pixel value is 1.2, and a VM coefficient to be multiplied with each of the pixel value adjacent left to the edge pixel value and the further left adjacent pixel value, and a VM coefficient to be multiplied each of the pixel value adjacent right to the edge pixel value and the further right adjacent pixel value are 0.95.

Part C of Fig. 27 illustrates an image signal before the luminance correction has been performed.

In part C of Fig. 27, an edge is formed between the third pixel value and fourth pixel value from the left, and therefore the fourth pixel value from the left serves as an edge pixel value.

Part D of Fig. 27 illustrates an image signal obtained by performing luminance correction using the VM coefficients of part A of Fig. 27 for the image signal of part C of Fig. 27.

In the image signal of part D of Fig. 27, as compared with the original image signal of part C of Fig. 27, the fourth pixel value serving as an edge pixel value is increased and the third and fifth pixel values from the left are decreased. Consequently, the edge is enhanced.

Part E of Fig. 27 illustrates an image signal obtained by performing luminance correction using the VM coefficients of part B of Fig. 27 for the image signal of part C of Fig. 27.

In the image signal of part E of Fig. 27, as compared with the original image signal of part C of Fig. 27, the fourth pixel value which is an edge pixel value is increased and the second, third, fifth, and sixth pixel values from the left are decreased. Consequently, the edge is enhanced more than that in the case of part D of Fig. 27.

Note that the VM coefficients of Fig. 27 are merely examples. Further, in Fig. 27, an edge portion that changes from a dark image to a bright image as viewed in the direction from left to right is illustrated. However, luminance correction is also performed in a similar manner for an edge portion that changes from a bright image to a dark image.

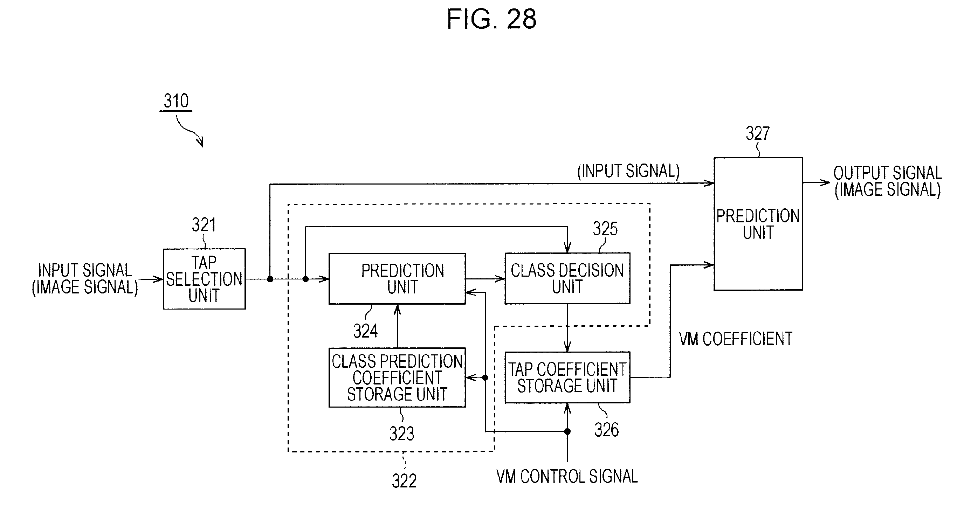

Next, Fig. 28 illustrates another example structure of the luminance correction unit 310 of Fig. 25.

In Fig. 28, the luminance correction unit 310 is constructed from a tap selection unit 321, a class classification unit 322, a tap coefficient storage unit 326, and a prediction unit 327, and performs luminance correction using DRC described in, for example, Japanese Unexamined Patent Application Publication No. 07-95591 (Japanese Patent No. 3271101) or the like.

Here, DRC will be explained.

DRC is a process of converting (mapping) a first image signal into a second image signal, and various signal processes can be performed by the definition of the first and second image data.

That is, for example, if the first image signal is set as a low spatial resolution image signal and the second image signal is set as a high spatial resolution image signal, DRC can be said to be a spatial resolution creation (improvement) process for improving the spatial resolution.

Also, for example, if the first image signal is set as a low S/N (Siginal/Noise) image signal and the second image signal is set as a high S/N image signal, DRC can be said to be a noise removal process for removing noise.

Further, for example, if the first image signal is set as an image signal having a predetermined number of pixels (size) and the second image signal is set as an image signal having a larger or smaller number of pixels than the first image signal, DRC can be said to be a resizing process for resizing (increasing or decreasing the scale of) an image.

Also, for example, if the first image signal is set as a low temporal resolution image signal and the second image signal is set as a high temporal resolution image signal, DRC can be said to be a temporal resolution creation (improvement) process for improving the temporal resolution.

Further, for example, if the first image signal is set as a decoded image signal obtained by decoding an image signal encoded in units of blocks such as MPEG (Moving Picture Experts Group) and the second image signal is set as an image signal that has not been encoded, the DRC can be a said to be a distortion removal process for removing various distortions such as block distortion caused by MPEG encoding and decoding.

Note that in the spatial resolution creation process, when a first image signal that is a low spatial resolution image signal is converted into a second image signal that is a high spatial resolution image signal, the second image signal can be set as an image signal having the same number of pixels as the first image signal or an image signal having a larger number of pixels than the first image signal. In a case where the second image signal is set as an image signal having a larger number of pixels than the first image signal, the spatial resolution creation process is a process for improving the spatial resolution and is also a resizing process for increasing the image size (the number of pixels).

As above, according to DRC, various signal processes can be realized depending on how first and second image signals are defined.

In DRC, predictive computation is performed using a tap coefficient of a class obtained by class-classifying a pixel of interest to which attention is directed within the second image signal into one class among a plurality of classes and using (the pixel values of) a plurality of pixels of the first image signal that is selected relative to the pixel of interest. Thereby, (the prediction value of) the pixel value of the pixel of interest is determined.

In Fig. 28, the image signal supplied from the ABL processing unit 33 (Fig. 2) to the luminance correction unit 310 of the VM processing unit 34 is supplied to a tap selection unit 321 as the first image signal.

The tap selection unit 321 uses an image signal obtained by performing luminance correction of the first image signal from the ABL processing unit 33 as the second image signal and sequentially uses the pixels constituting this second image signal as pixels of interest to select, as prediction taps, some of (the pixel values of) the pixels constituting the first image signal which are used for predicting (the pixel values of) the pixels of interest.

Specifically, the tap selection unit 321 selects, as prediction taps, a plurality of pixels of the first image signal which are spatially or temporally located near the time-space position of a pixel of interest.

Furthermore, the tap selection unit 321 selects, as class taps, some of the pixels constituting the first image signal which are used for class classification for separating the pixel of interest into one of a plurality of classes. That is, the tap selection unit 321 selects class taps in a manner similar to that in which the tap selection unit 321 selects prediction taps.

Note that the prediction taps and the class taps may have the same tap configuration (positional relationship with respect to the pixel of interest) or may have different tap configurations.

The prediction taps obtained by the tap selection unit 321 are supplied to the prediction unit 327, and the class taps obtained by the tap selection unit 321 are supplied to a class classification unit 322.

The class classification unit 322 is constructed from a class prediction coefficient storage unit 323, a prediction unit 324, and a class decision unit 325, and performs class classification of the pixel of interest on the basis of the class taps from the tap selection unit 321 and supplies the class code corresponding to a resulting class to the tap coefficient storage unit 326.

Here, the details of the class classification performed in the class classification unit 322 will be described below.

The tap coefficient storage unit 326 stores a tap coefficient for each class, which is determined by learning described below, as a VM coefficient, and further outputs the tap coefficient (tap coefficient of the class represented by the class code supplied from the class classification unit 322) stored at the address corresponding to the class code supplied from the class classification unit 322 among the stored tap coefficients. This tap coefficient is supplied to the prediction unit 327.

Here, the term tap coefficient is equivalent to a coefficient to be multiplied with input data at a so-called tap of a digital filter.

The prediction unit 327 obtains the prediction taps output from the tap selection unit 321 and the tap coefficient output from the tap coefficient storage unit 326, and performs predetermined predictive computation for determining a prediction value of the true value of the pixel of interest using the prediction taps and the tap coefficient. Thereby, the prediction unit 327 determines and outputs (the prediction value of) the pixel value of the pixel of interest, that is, the pixel values of the pixels constituting the second image signal, i.e., the pixel values obtained after the luminance correction.

Note that each of the class prediction coefficient storage unit 323, the prediction unit 324, which constitute the class classification unit 322, and the tap coefficient storage unit 326 performs the setting of an operation condition or necessary selection according to the VM control signal supplied from the VM control unit 39 (Fig. 2).

Next, the learning of tap coefficients for individual classes, which are stored in the tap coefficient storage unit 326 of Fig. 28 as VM coefficients, will be explained.

The tap coefficients used for predetermined predictive computation of DRC are determined by learning using multiple image signals as learning image signals.

That is, for example, now, it is assumed that an image signal before luminance correction is used as the first image signal and an image signal after the luminance correction, which is obtained by performing luminance correction for the first image signal, is used as the second image signal to select in DRC a prediction tap from the first image signal, and that the pixel value of a pixel of interest of the second image signal is determined (predicted) using its prediction taps and tap coefficients by using predetermined predictive computation.

As the predetermined predictive computation, if, for example, linear first-order predictive computation is adopted, a pixel value y of the second image signal can be determined by the following linear first-order equation.

[Math. 3]

$$y = \sum_{n=1}^{N} w_n x_n$$

$$\cdots (3)$$

In this regard, in Equation (3), $x_n$ represents the pixel value of the n-th pixel (hereinafter referred to as an uncorrected pixel, as necessary) of the first image signal constituting the prediction taps for the pixel of interest y of the second image signal, and $w_n$ represents the n-th tap coefficient to be multiplied with (the pixel value of) the n-th uncorrected pixel. Note that in Equation (3), the prediction taps are constituted by N uncorrected pixels $x_1$, $x_2$, ..., $x_N$.

Here, the pixel value y of the pixel of interest of the second image signal can also be determined by a second- or higher-order equation rather than the linear first-order equation given in Equation (3).

Now, if the true value of the pixel value of the k-th sample of the second image signal is represented by $y_k$ and if the prediction value of the true value $y_k$ thereof, which is obtained by Equation (3), is represented by $y_k'$, a prediction error $e_k$ therebetween is expressed by the following equation.

[Math. 4]

$$e_k = y_k - y_k'$$

$$\cdots (4)$$

Now, since the prediction value $y_k'$ in Equation (4) is determined according to Equation (3), replacing $y_k'$ in Equation (4) according to Equation (3) yields the following equation.

[Math. 5]

$$e_k = y_k - \left( \sum_{n=1}^{N} w_n x_{n,k} \right)$$

$$\cdots (5)$$

In this regard, in Equation (5), $x_{n,k}$ represents the n-th uncorrected pixel constituting the prediction taps for the pixel of the k-th sample of the second image signal.

The tap coefficient $w_n$ that allows the prediction error $e_k$ in Equation (5) (or Equation (4)) to be 0 becomes optimum to predict the pixel of the second image signal. In general, however, it is difficult to determine the tap coefficient $w_n$ for all the pixels of the second image signal.

Accordingly, for example, if the least squares method is adopted as the standard indicating that the tap coefficient $w_n$ is optimum, the optimum tap coefficient $w_n$ can be determined by minimizing the total sum E of square errors expressed by the following equation.

[Math. 6]

$$E = \sum_{k=1}^{K} e_k^2$$

$$\cdots (6)$$

In this regard, in Equation (6), K represents the number of samples (the total number of learning samples) of sets of the pixel $y_k$ of the second image signal, and the uncorrected pixels $x_{1,k}$, $x_{2,k}$,... , $x_{N,k}$ constituting the prediction taps for this pixel $y_k$ of the second image signal.

The minimum value (local minimum value) of the total sum E of square errors in Equation (6) is given by $w_n$ that allows the value obtained by partially differentiating the total sum E with the tap coefficient $w_n$ to be 0, as given in Equation (7).

[Math. 7]

$$\frac{\partial E}{\partial w_n} = e_1 \frac{\partial e_1}{\partial w_n} + e_2 \frac{\partial e_2}{\partial w_n} + \cdots + e_k \frac{\partial e_k}{\partial w_n} = 0 \quad (n=1, 2, \cdots, N)$$

$$\cdots (7)$$

Then, partially differentiating Equation (5) described above with the tap coefficient $w_n$ yields the following equations.

[Math. 8]

$$\frac{\partial e_k}{\partial w_1} = -x_{1,k}, \quad \frac{\partial e_k}{\partial w_2} = -x_{2,k}, \cdots, \quad \frac{\partial e_k}{\partial w_N} = -x_{N,k}, \quad (k=1, 2, \cdots, K)$$

$$\cdots (8)$$

The equations below are obtained from Equations (7) and (8).

[Math. 9]

$$\sum_{k=1}^{K} e_k x_{1,k} = 0, \quad \sum_{k=1}^{K} e_k x_{2,k} = 0, \quad \cdots \sum_{k=1}^{K} e_k x_{N,k} = 0$$

$$\cdots (9)$$

By substituting Equation (5) into $e_k$ in Equation (9), Equation (9) can be expressed by normal equations given in Equation (10).

[Math. 10]

$$
\begin{bmatrix}
\left(\sum_{k=1}^{K} x_{1,k}x_{1,k}\right) & \left(\sum_{k=1}^{K} x_{1,k}x_{2,k}\right) & \cdots & \left(\sum_{k=1}^{K} x_{1,k}x_{N,k}\right) \\
\left(\sum_{k=1}^{K} x_{2,k}x_{1,k}\right) & \left(\sum_{k=1}^{K} x_{2,k}x_{2,k}\right) & \cdots & \left(\sum_{k=1}^{K} x_{2,k}x_{N,k}\right) \\
\vdots & \vdots & \ddots & \vdots \\
\left(\sum_{k=1}^{K} x_{N,k}x_{1,k}\right) & \left(\sum_{k=1}^{K} x_{N,k}x_{2,k}\right) & \cdots & \left(\sum_{k=1}^{K} x_{N,k}x_{N,k}\right)
\end{bmatrix}
\begin{bmatrix}
w_1 \\ w_2 \\ \vdots \\ w_N
\end{bmatrix}
=
\begin{bmatrix}
\left(\sum_{k=1}^{K} x_{1,k}y_k\right) \\
\left(\sum_{k=1}^{K} x_{2,k}y_k\right) \\
\vdots \\
\left(\sum_{k=1}^{K} x_{N,k}y_k\right)
\end{bmatrix}
$$

$$\cdots (10)$$

The normal equations in Equation (10) can be solved for the tap coefficient $w_n$ by using, for example, a sweeping-out method (elimination method of Gauss-Jordan) or the like.

By formulating and solving the normal equations in Equation (10) for each class, the optimum tap coefficient (here, tap coefficient that minimizes the total sum E of square errors) $w_n$ can be determined for each class.

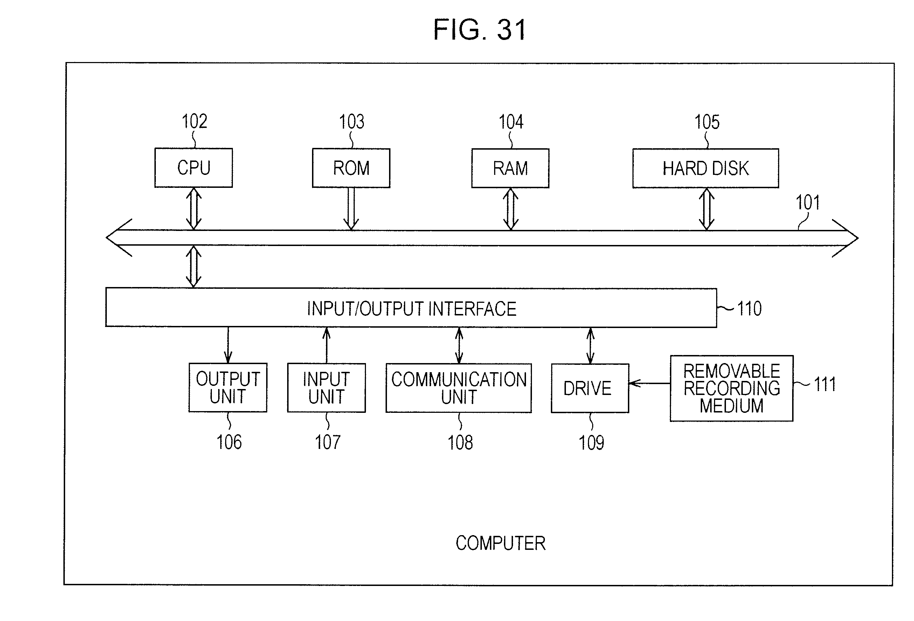

As above, learning for determining the tap coefficient $w_n$ can be performed by, for example, a computer (Fig. 31) described below.

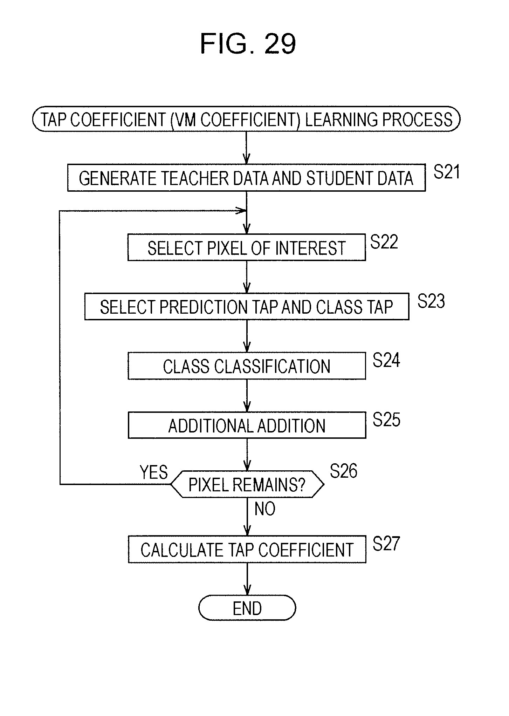

Next, a process of learning (learning process) for determining the tap coefficient $w_n$, which is performed by the computer, will be explained with reference to a flowchart of Fig. 29.

First, in step S21, the computer generates teacher data equivalent to the second image signal and student data equivalent to the first image signal from a learning image signal prepared in advance for learning. The process proceeds to step S22.

That is, the computer generates a mapped pixel value of mapping as the predictive computation given by Equation (3), i.e., a corrected pixel value obtained after luminance correction, as the teacher data equivalent to the second image signal, which serves as a teacher (true value) of the learning of tap coefficients, from the learning image signal.

Furthermore, the computer generates a pixel value to be converted by mapping as the predictive computation given by Equation (3), as the student data equivalent to the first image signal, which serves as a student of the learning of tap coefficients, from the learning image signal. Herein, for example, the computer directly sets the learning image signal as the student data equivalent to the first image signal.

In step S22, the computer selects, as a pixel of interest, teacher data unselected as a pixel of interest. The process proceeds to step S23. In step S23, like the tap selection unit 321 of Fig. 28, the computer selects, for the pixel of interest, a plurality of pixels, which are used as prediction taps, from the student data and also selects a plurality of pixels which are used as class taps. The process proceeds to step S24.

In step S24, the computer performs class classification of the pixel of interest on the basis of the class taps for the pixel of interest in a manner similar to that of the class classification unit 322 of Fig. 28 to obtain the class code corresponding to the class of the pixel of interest. The process proceeds to step S25.

In step S25, the computer performs, for the class of the pixel of interest, additional addition given in Equation (10) on the pixel of interest and the student data constituting the prediction taps selected for the pixel of interest. The process proceeds to step S26.

That is, the computer performs computation equivalent to the multiplication ($x_{n,k}x_{n',k}$) of student data items in the matrix in the left side of Equation (10) and the summation ($\Sigma$), for the class of the pixel of interest, using a prediction tap (student data) $x_{n,k}$.

Furthermore, the computer performs computation equivalent to the multiplication ($x_{n,k}y_k$) of the student data $x_{n,k}$ and teacher data $y_k$ in the vector in the right side of Equation (10) and the summation ($\Sigma$), for the class of the pixel of interest, using the prediction tap (student data) $x_{n,k}$ and the teacher data $y_k$.

That is, the computer stores in a memory incorporated therein (for example, the RAM 104 of Fig. 31) the component ($\Sigma x_{n,k}x_{n',k}$) in the matrix in the left side of Equation (10) and the component ($\Sigma x_{n,k}y_k$) in the vector in the right side thereof determined for the teacher data which is the previous pixel of interest, in the class of the pixel of interest, and additionally adds (performs addition expressed by the summation in Equation (10)) the corresponding component

$x_{n,k+1}x_{n',k+1}$ or $x_{n,k+1}y_{k+1}$, which is calculated for teacher data which is a new pixel of interest using the teacher data $y_{k+1}$ thereof and the student data $x_{n,k+1}$, to the component $(\Sigma_{n,k}x_{n',k})$ in the matrix or the component $(\Sigma x_{n,k}y_k)$ in the vector.

In step S26, the computer determines whether or not there remains teacher data unselected as a pixel of interest. In a case where it is determined in step S26 that there remains teacher data unselected as a pixel of interest, the process returns to step S22 and subsequently a similar process is repeated.

Further, in a case where it is determined in step S26 that there remains no teacher data unselected as a pixel of interest, the process proceeds to step S27, in which the computer solves the normal equations for each class, which are constituted by the matrix in the left side and the vector in the right side of Equation (10) for each class obtained by the preceding processing of steps S22 to S26, thereby determining and outputting the tap coefficient $w_n$ for each class. The process ends.

The tap coefficients $w_n$ for the individual classes determined as above are stored in the tap coefficient storage unit 326 of Fig. 28 as VM coefficients.

Next, the class classification performed in the class classification unit 322 of Fig. 28 will be explained.

In the class classification unit 322, the class taps for the pixel of interest from the tap selection unit 321 are supplied to the prediction unit 324 and the class decision unit 325.

The prediction unit 324 predicts the pixel value of one pixel among a plurality of pixels constituting the tap classes from the tap selection unit 321 using the pixel values of the other pixels and class prediction coefficients stored in the class prediction coefficient storage unit 323, and supplies the predicted value to the class decision unit 325.

That is, the class prediction coefficient storage unit 323 stores a class prediction coefficient used for predicting the pixel value of one pixel among a plurality of pixels constituting class taps for each class.

Specifically, if it is assumed that the class taps for the pixel of interest are constituted by pixel values of (M+1) pixels and that the prediction unit 324 regards, for example, $x_{M+1}$ of (M+1) pixels constituting the class taps, the (M+1)-th pixel value $x_{M+1}$ as an object to be predicted among the pixel values $x_1, x_2, ..., x_M$, and predicts the (M+1)-th pixel value $x_{M+1}$, which is an object to be predicted, using the other M pixels $x_1, x_2, ..., x_M$, the class prediction coefficient storage unit 323 stores, for example, M class prediction coefficients $c_{j,1}, c_{j,2}, ..., c_{j,M}$ to be multiplied with each of the M pixels $x_1, x_2, ..., x_M$ for the class #j.

In this case, the prediction unit 324 determines the prediction value $x'_{j,M+1}$ of the pixel value $x_{M+1}$, which is an object to be predicted, for the class #j according to, for example, the equation $x'_{j,M+1} = x_1c_{j,1} + x_2c_{j,2} + ... +, x_Mc_{j,M}$.

For example, now, if the pixel of interest is classified into any class among J classes #1 to #J by class classification, the prediction unit 324 determines prediction values $x'_{1,M+1}$ to $x'_{J,M+1}$ for each of the classes #1 to #J, and supplies them to the class decision unit 325.

The class decision unit 325 compares each of the prediction values $x'_{1,M+1}$ to $x'_{J,M+1}$ from the prediction unit 324 with the (M+1)-th pixel value (true value) $x_{M+1}$, which is an object to be predicted, of the class taps for the pixel of interest from the tap selection unit 321, and decides the class #j of the class prediction coefficients $c_{j,1}, c_{j,2}, ..., c_{j,M}$ used for determining the prediction value $x'_{j,M+1}$ having the minimum prediction error with respect to the (M+1)-th pixel value $x_{M+1}$, which is an object to be predicted, among the prediction values $x'_{1,M+1}$ to be $x'_{J,M+1}$ to the class of the pixel of interest, and supplies the class code representing this class #j to the tap coefficient storage unit 326 (Fig. 28).

Here, the class prediction coefficient $c_{j,m}$ stored in the class prediction coefficient storage unit 323 is determined by learning.

The learning for determining the class prediction coefficient $c_{j,m}$ can be performed by, for example, a computer (Fig. 31) described below.

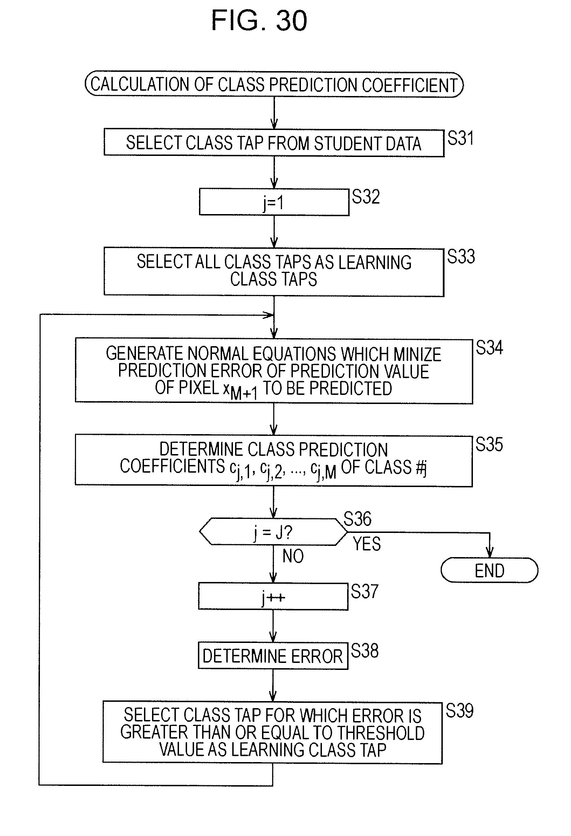

The process of the learning (learning process) for determining the class prediction coefficient $c_{j,m}$, which is performed by the computer, will be explained with reference to a flowchart of Fig. 30.

In step S31, for example, similarly to step S21 of Fig. 29, the computer generates teacher data equivalent to the second image signal and student data equivalent to the first image signal from learning image signal. Furthermore, in step S31, the computer sequentially selects teacher data as a pixel of interest, and, similarly to step S23 of Fig. 29, selects a plurality of pixels to be set as class taps from the student data for each pixel of interest. The process proceeds to step S32.

In step S32, the computer initializes a variable j representing a class to 1. The process proceeds to step S33.

In step S33, the computer selects all the class taps obtained in step S31 as class taps for learning (learning class taps). The process proceeds to step S34.

In step S34, similarly to the learning of the tap coefficients of Fig. 29, the computer generates, for the learning class taps, normal equations (normal equations equivalent to Equation (10)) that minimizes the prediction error with respect to the true value $x_{M+1}$ of the prediction value $x'_{j,M+1}$ of the pixel value $x_{M+1}$ which is an object to be predicted for the class #j, which is determined according to the equation $x'_{j,M+1} = x_1c_{j,1} + x_2c_{j,2} + ... +, x_Mc_{j,M}$. The process proceeds to step S35.

In step S35, the computer solves the normal equations obtained in step S34 to determine the class prediction coefficient $c_{j,m}$ for the class #j (m = 1, 2, ..., M). The process proceeds to step S36.

In step S36, the computer determines whether or not the variable j is equal to the total number J of classes. In a case where it is determined that they do not equal, the process proceeds to step S37.

In step S37, the computer increments the variable j by only 1. The process proceeds to step S38, in which the computer determines, for the learning class taps, the prediction error when predicting the pixel $x_{M+1}$ of the object to be predicted, by using the class prediction coefficient $c_{j,m}$ obtained in step S35. The process proceeds to step S39.

In step S39, the computer selects a learning class tap for which the prediction error determined in step S38 is greater than or equal to a predetermined threshold value as a new learning class tap.

Then, the process returns from step S39 to step S34, and subsequently, the class prediction coefficient $c_{j,m}$ for the class #j is determined using the new learning class tap in a manner similar to that described above.

On the other hand, in a case where it is determined in step S36 that the variable j is equal to the total number J of classes, that is, in a case where the class prediction coefficients $c_{1,m}$ to $c_{J,m}$ have been determined for all the J classes #1 to #J, the process ends.

As above, in the image signal processing device of Fig. 2, in view of the CRT display apparatus providing display by allowing a fluorescent material to be illuminated by an electron beam, a process performed when the electron beam is deflected and a signal process that takes the influence of the physical shape of the electron beam and its change on the display into account are performed. Thus, in an FPD display apparatus using an LCD or the like, it is possible to display an image with image quality equivalent to that displayed on a CRT display apparatus.

According to the image signal processing device of Fig. 2, furthermore, it is possible to emulate display characteristics caused by different characteristics of a CRT itself, and it is possible to switch between different brightness characteristics or textures using the same LCD. For example, it is possible to facilitate accurate color adjustment or image quality adjustment, and the like at the sending time by comparison of the difference in color development characteristic between a professional-use CRT and a general-use (for the general public) CRT on the same screen.

Further, according to the image signal processing device of Fig. 2, likewise, it is possible to easily confirm the difference in display characteristics between an LCD and a CRT.

According to the image signal processing device of Fig. 2, furthermore, it is possible to display an image with "favorite image quality" in its original meaning.

Further, according to the image signal processing device of Fig. 2, it is possible to provide simultaneous viewing of display devices having different characteristics (for example, professional-use and general-use CRTs, LCDs, CRTs, and the like) by changing the processing range within the display screen. This facilitates utilization for purposes such as comparison and adjustment.

Next, at least a portion of the series of processes described above can be performed by dedicated hardware or can be performed by software. In a case where the series of processes is performed by software, a program constituting the software is installed into a general-purpose computer or the like.

Accordingly, Fig. 31 illustrates an example structure of an embodiment of a computer into which the program constituting the series of processes described above is installed.

The program can be recorded in advance on a hard disk 105 or a ROM 103 serving as a recording medium incorporated in the computer.

Alternatively, the program can be temporarily or permanently stored (recorded) on a removable recording medium 111 such as a flexible disk, a CD-ROM (Compact Disc Read Only Memory), an MO (Magneto Optical) disk, a DVD (Digital Versatile Disc), a magnetic disk, or a semiconductor memory. The removable recording medium 111 can be provided as so-called packaged software.

Note that the program can be, as well as installed into the computer from the removable recording medium 111 as described above, transferred to the computer from a download site in a wireless fashion via a satellite for digital satellite broadcasting or transferred to the computer in a wired fashion via a network such as a LAN (Local Area Network) or the Internet. In the computer, the thus transferred program can be received at a communication unit 108 and can be installed into the hard disk 105 incorporated therein.

The computer incorporates therein a CPU (Central Processing Unit) 102. The CPU 102 is connected to an input/output interface 110 via a bus 101. When an instruction is input from a user through an operation or the like of an input unit 107 constructed with a keyboard, a mouse, a microphone, and the like via the input/output interface 110, the CPU 102 executes a program stored in the ROM (Read Only Memory) 103 according to the instruction. Alternatively, the CPU 102 loads onto a RAM (Random Access Memory) 104 a program stored in the hard disk 105, a program transferred from a satellite or a network and received at the communication unit 108 and installed into the hard disk 105, or a program read from the removable recording medium 111 attached to a drive 109 and installed into the hard disk 105, and executes the program. Thereby, the CPU 102 performs the processes according to the flowcharts described above or the processes performed by the structure of the block diagrams described above. Then, the CPU 102 causes this processing result to be, according to necessity, for example, output from an output unit 106 constructed with an LCD (Liquid Crystal Display), a speaker, and the like via the input/output interface 110, sent from the communication unit 108, or recorded or the like onto the hard disk 105.

Here, in this specification, processing steps describing a program for causing a computer to perform various processes may not necessarily be processed in time sequence in accordance with the order described as the flowcharts, and include processes executed in parallel or individually (for example, parallel processes or object-based processes).

Further, the program may be processed one computer or processed in a distributed fashion by a plurality of computers. Furthermore, the program may be transferred to a remote computer and executed thereby.

Note that embodiments of the present invention are not limited to the embodiments described above, and a variety of modifications can be made without departing from the scope of the present invention.

**Claims**

1. An image signal processing device for processing an image signal so that an image obtained when the image signal is displayed on a display apparatus of a non-CRT (Cathode Ray Tube) display type looks like an image displayed on a CRT display apparatus, **characterized by** comprising:

   ABL processing means for applying a process that emulates an ABL (Automatic Beam current Limiter) process to the image signal;
   VM processing means for applying a process that emulates a VM (Velocity Modulation) process to the image signal processed by the ABL processing means; and
   gamma correction means for performing gamma correction on the image signal processed by the VM processing means.

2. The image signal processing device according to Claim 1, **characterized in that** the VM processing means has luminance correction means for performing, for the image signal processed by the ABL processing means, correction of an amount of influence of a change in deflection velocity of an electron beam of the CRT display apparatus on luminance.

3. The image signal processing device according to Claim 1, **characterized in that** the VM processing means has EB (Erectron Beam) processing means for performing, for the image signal processed by the ABL processing means, a process that emulates the electron beam of the CRT display apparatus spreading out and impinging on a fluorescent material of the CRT display apparatus.

4. An image signal processing method for an image signal processing device for processing an image signal so that an image obtained when the image signal is displayed on a display apparatus of a non-CRT (Cathode Ray Tube) display type looks like an image displayed on a CRT display apparatus, **characterized by** comprising the steps of:

   applying a process that emulates an ABL (Automatic Beam current Limiter) process to the image signal;
   applying a process that emulates a VM (Velocity Modulation) process to the image signal on which the process that emulates the ABL process has been performed; and
   performing gamma correction on the image signal on which the process that emulates the VM process has been performed.

5. A program for causing a computer to function as an image signal processing device for processing an image signal so that an image obtained when the image signal is displayed on a display apparatus of a non-CRT (Cathode Ray Tube) display type looks like an image displayed on a CRT display apparatus, the program causing the computer to function as:

   ABL processing means for applying a process that has emulated an ABL (Automatic Beam current Limiter) process to the image signal;
   VM processing means for applying a process that has emulated a VM (Velocity Modulation) process to the image signal processed by the ABL processing means; and
   gamma correction means for performing gamma correction on the image signal processed by the VM processing means.

EP 2 093 746 A1

# FIG. 1

```
                  11              12              13
                  │               │               │
IMAGE SIGNAL  ┌─────────┐    ┌──────────┐    ┌──────────┐   IMAGE SIGNAL
              │BRIGHTNESS│    │IMAGE     │    │          │   (CRT DRIVING)
─────────────▶│ADJUSTMENT│───▶│QUALITY   │───▶│γ CORRECTION│──────────────▶
              │CONTRAST  │    │IMPROVEMENT│   │UNIT      │              TO
              │ADJUSTMENT│    │PROCESSING │   │          │         LCD PANEL
              │UNIT      │    │UNIT      │    └──────────┘
              └─────────┘    └──────────┘
```

# FIG. 2

IMAGE SIGNAL →

31 BRIGHTNESS ADJUSTMENT CONTRAST ADJUSTMENT UNIT

32 IMAGE QUALITY IMPROVEMENT PROCESSING UNIT

33 ABL PROCESSING UNIT

34 VM PROCESSING UNIT

35 CRT $\gamma$ PROCESSING UNIT

CRT PROCESSING IMAGE SIGNAL → TO LCD PANEL

36 FULL SCREEN BRIGHTNESS AND AVERAGE LEVEL DETECTION UNIT

37 PEAK DETECTION DIFFERENTIAL CONTROL VALUE DETECTION UNIT

38 ABL CONTROL UNIT

39 VM CONTROL UNIT

40 DISPLAY COLOR TEMPERATURE COMPENSATION CONTROL UNIT

# FIG. 3

IMAGE SIGNAL → **BRIGHTNESS ADJUSTMENT CONTRAST ADJUSTMENT UNIT** (51) → **IMAGE QUALITY IMPROVEMENT PROCESSING UNIT** (52) → **GAIN ADJUSTMENT UNIT (LIMITER)** (53) → **γ CORRECTION UNIT** (54) → IMAGE SIGNAL

CRT DRIVING IMAGE SIGNAL → **VIDEO AMPLIFIER** (55)

**FBT** (57) → **BEAM CURRENT DETECTION UNIT** (58) → **ABL CONTROL UNIT** (59)

**IMAGE SIGNAL DIFFERENTIATING CIRCUIT** (60) → **VM DRIVING CIRCUIT** (61)

DEFLECTION YOKE DY

ELECTRON GUN EG

VM COIL DRIVING SIGNAL

56

EP 2 093 746 A1

# FIG. 4

```
        ( START )
            │
            ▼
┌──────────────────────┐
│  ADJUSTMENT PROCESS  │  S11
└──────────────────────┘
            │
            ▼
┌──────────────────────┐
│    IMAGE QUALITY     │  S12
│ IMPROVEMENT PROCESS  │
└──────────────────────┘
            │
            ▼
┌──────────────────────┐
│     ABL PROCESS      │  S13
└──────────────────────┘
            │
            ▼
┌──────────────────────┐
│      VM PROCESS      │  S14
└──────────────────────┘
            │
            ▼
┌──────────────────────┐
│   CRT γ PROCESS      │  S15
└──────────────────────┘
            │
            ▼
         ( END )
```

EP 2 093 746 A1

# FIG. 5

34

210

212

220

IMAGE SIGNAL ⊗ → EB PROCESSING UNIT → IMAGE SIGNAL

211

VM CONTROL SIGNAL → VM COEFFICIENT GENERATION UNIT

# FIG. 6

COEFFICIENT = 1

VM COEFFICIENT

t=−2    t=0    t=+2

t=−3    t=−1    t=+1    t=+3

FIG. 7

ELECTRON BEAM HORIZONTAL POSITION

HORIZONTAL DEFLECTION YOKE APPLYING VOLTAGE

A  HORIZONTAL DEFLECTION (SWEEP) WAVEFORM AT CRT DISPLAY APPARATUS (IN CASE OF ABSENCE OF VM PROCESS)

B  VM COIL DRIVING SIGNAL AT CRT DISPLAY APPARATUS

C  HORIZONTAL DEFLECTION (SWEEP) WAVEFORM AT CRT DISPLAY APPARATUS (IN CASE OF PRESENCE OF VM PROCESS)

D  SCHEMATIC DIAGRAM OF BRIGHTNESS IN HORIZONTAL DIRECTION BY VM PROCESS (AMOUNT OF ELECTRON BEAM APPLIED TO FLUORESCENT MATERIAL)

# FIG. 8

# FIG. 9

BLUE
GREEN
RED

A    SHADOW MASK

RED
GREEN
BLUE

B    APERTURE GRILLE

EP 2 093 746 A1

33

# FIG. 10

BLUE
GREEN
RED

SPOT

A    RANGE OVER WHICH ELECTRON
     BEAM IMPINGES AT INTERMEDIATE
     LUMINANCE LEVEL

     SHADOW MASK

RED
GREEN
BLUE

SPOT

B    RANGE OVER WHICH ELECTRON
     BEAM IMPINGES AT INTERMEDIATE
     LUMINANCE LEVEL

     APERTURE GRILLE

EP 2 093 746 A1

# FIG. 11

BLUE
GREEN
RED

SPOT

A    RANGE OVER WHICH ELECTRON
     BEAM IMPINGES AT HIGH
     LUMINANCE LEVEL

     SHADOW MASK

RED
GREEN
BLUE

SPOT

B    RANGE OVER WHICH ELECTRON
     BEAM IMPINGES AT HIGH
     LUMINANCE LEVEL

     APERTURE GRILLE

EP 2 093 746 A1

# FIG. 12

GREEN FLUORESCENT MATERIAL

RED FLUORESCENT MATERIAL

BLUE FLUORESCENT MATERIAL

GREEN FLUORESCENT MATERIAL

RED FLUORESCENT MATERIAL

BLUE FLUORESCENT MATERIAL

APERTURE GRILLE

SLIT IN APERTURE GRILLE

ELECTRON BEAM

ELECTRON BEAM

A

B

EP 2 093 746 A1

# FIG. 13

INTENSITY OF
ELECTRON BEAM

FIG. 14

# FIG. 15

INTENSITY OF
ELECTRON BEAM

A

B

C

D

EP 2 093 746 A1

# FIG. 16

INTENSITY OF ELECTRON BEAM

A

C

B

D

EP 2 093 746 A1

FIG. 17

# FIG. 18

SLIT PITCH

PIXEL-OF-INTEREST POSITION

SLIT OF INTEREST

PIXEL-OF-INTEREST POSITION (VERTICAL DIRECTION)

LEFT SLIT

SLIT WIDTH

RIGHT SLIT

APERTURE GRILLE

PROBABILITY DENSITY FUNCTION

$-\dfrac{S}{2}$    $+\dfrac{S}{2}$

ADJACENT-PIXEL INTEGRATION INTERVAL

PIXEL-OF-INTEREST INTEGRATION INTERVAL (HORIZONTAL DIRECTION)

A

PIXEL-OF-INTEREST INTEGRATION INTERVAL (VERTICAL DIRECTION)

B

ADJACENT-PIXEL INTEGRATION INTERVAL (VERTICAL DIRECTION)

C

EP 2 093 746 A1

# FIG. 19

ELECTRON BEAM

APERTURE GRILLE

A

B

EP 2 093 746 A1

# FIG. 20

x: HORIZONTAL PIXEL POSITION (RELATIVE)

y: VERTICAL PIXEL POSITION (RELATIVE)

A

A (x−1,y−1)   B (x+0,y−1)   C (x+1,y−1)

D (x−1,y+0)   E (x+0,y+0)   F (x+1,y+0)

G (x−1,y+1)   H (x+0,y+1)   I (x+1,y+1)

PIXEL OF INTEREST

PIXEL VALUE (H)

INTENSITY

0

C

INTENSITY

PIXEL VALUE (H)

0

B

EP 2 093 746 A1

# FIG. 21

# FIG. 22

EP 2 093 746 A1

# FIG. 23

220

SELECTOR

EB FUNCTION
UNIT

SELECTOR

271

250

272

# FIG. 24

# FIG. 25

IMAGE SIGNAL → [310 LUMINANCE CORRECTION UNIT] → [220 EB PROCESSING UNIT] → IMAGE SIGNAL

VM CONTROL SIGNAL

34

FIG. 26

310

311

DELAY TIMING ADJUSTMENT UNIT — (INPUT SIGNAL) → 

OUTPUT SIGNAL (IMAGE SIGNAL)

INPUT SIGNAL (IMAGE SIGNAL) →

DIFFERENTIATING CIRCUIT → THRESHOLD PROCESSING UNIT → WAVEFORM SHAPING PROCESSING UNIT — VM COEFFICIENT →

MULTIPLYING CIRCUIT

312        313                        314        315

VM CONTROL SIGNAL

EP 2 093 746 A1

# FIG. 27

EDGE PIXEL VALUE

PIXEL VALUE

INPUT SIGNAL

C

OUTPUT SIGNAL

D

OUTPUT SIGNAL

E

COEFFICIENT=1.1
COEFFICIENT=1.0
COEFFICIENT=0.95

t=-2    t=0    t=+2
t=-3   t=-1   t=+1   t=+3

VM COEFFICIENT

A

COEFFICIENT=1.2
COEFFICIENT=1.0
COEFFICIENT=0.95

t=-2    t=0    t=+2
t=-3   t=-1   t=+1   t=+3

VM COEFFICIENT

B

# FIG. 28

310

INPUT SIGNAL
(IMAGE SIGNAL)

321
TAP SELECTION UNIT

(INPUT SIGNAL)

327
PREDICTION UNIT

OUTPUT SIGNAL
(IMAGE SIGNAL)

324
PREDICTION UNIT

325
CLASS DECISION UNIT

323
CLASS PREDICTION COEFFICIENT STORAGE UNIT

326
TAP COEFFICIENT STORAGE UNIT

322

VM COEFFICIENT

VM CONTROL SIGNAL

EP 2 093 746 A1

# FIG. 29

TAP COEFFICIENT (VM COEFFICIENT) LEARNING PROCESS

GENERATE TEACHER DATA AND STUDENT DATA — S21

SELECT PIXEL OF INTEREST — S22

SELECT PREDICTION TAP AND CLASS TAP — S23

CLASS CLASSIFICATION — S24

ADDITIONAL ADDITION — S25

YES — PIXEL REMAINS? — S26

NO

CALCULATE TAP COEFFICIENT — S27

END

# FIG. 30

```
( CALCULATION OF CLASS PREDICTION COEFFICIENT )
                         │
                         ▼
   ┌─────────────────────────────────────────┐
   │ SELECT CLASS TAP FROM STUDENT DATA      │ S31
   └─────────────────────────────────────────┘
                         │
                         ▼
            ┌─────────────────────┐
            │         j=1         │ S32
            └─────────────────────┘
                         │
                         ▼
   ┌─────────────────────────────────────────┐
   │ SELECT ALL CLASS TAPS AS LEARNING       │ S33
   │ CLASS TAPS                              │
   └─────────────────────────────────────────┘
                         │
                         ▼
   ┌─────────────────────────────────────────┐
   │ GENERATE NORMAL EQUATIONS WHICH MINIZE  │ S34
   │ PREDICTION ERROR OF PREDICTION VALUE    │
   │ OF PIXEL x_{M+1} TO BE PREDICTED        │
   └─────────────────────────────────────────┘
                         │
                         ▼
   ┌─────────────────────────────────────────┐
   │ DETERMINE CLASS PREDICTION              │ S35
   │ COEFFICIENTS c_{j,1}, c_{j,2}, …, c_{j,M} OF CLASS #j │
   └─────────────────────────────────────────┘
                         │
                         ▼
              ⟨  j = J?  ⟩ S36  ──YES──▶ ( END )
                         │
                        NO
                         ▼
            ┌─────────────────────┐
            │        j++          │ S37
            └─────────────────────┘
                         │
                         ▼
            ┌─────────────────────┐
            │ DETERMINE ERROR     │ S38
            └─────────────────────┘
                         │
                         ▼
   ┌─────────────────────────────────────────┐
   │ SELECT CLASS TAP FOR WHICH ERROR IS     │ S39
   │ GREATER THAN OR EQUAL TO THRESHOLD      │
   │ VALUE AS LEARNING CLASS TAP             │
   └─────────────────────────────────────────┘
```

## FIG. 31

COMPUTER

EP 2 093 746 A1

## INTERNATIONAL SEARCH REPORT

| | International application No. |
|---|---|
| | PCT/JP2007/074260 |

A.  CLASSIFICATION OF SUBJECT MATTER
*G09G3/20*(2006.01)i, *G09G5/00*(2006.01)i, *H04N5/20*(2006.01)i, *H04N5/66* (2006.01)i

According to International Patent Classification (IPC) or to both national classification and IPC

B.  FIELDS SEARCHED

Minimum documentation searched (classification system followed by classification symbols)
G09G3/00-5/42, H04N5/66-5/74

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2008 |
| Kokai Jitsuyo Shinan Koho | 1971-2008 | Toroku Jitsuyo Shinan Koho | 1994-2008 |

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| Y | JP 2001-296831 A  (Sharp Corp.), 26 October, 2001 (26.10.01), Par. Nos. [0016], [0053] to [0077], [0132] to [0147]; Figs. 4 to 10 & US 2001/035850 A1    & US 7170477 B2 | 1-5 |
| Y | JP 2002-199248 A  (Sony Corp.), 12 July, 2002 (12.07.02), Par. Nos. [0009], [0025] to [0040]; Figs. 1, 4 to 6 (Family: none) | 1-5 |
| P,Y | JP 2007-110327 A  (Sharp Corp.), 26 April, 2007 (26.04.07), Par. Nos. [0015] to [0029]; Figs. 1 to 8 (Family: none) | 1-5 |

☒  Further documents are listed in the continuation of Box C.          ☐  See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 17 January, 2008 (17.01.08) | 29 January, 2008 (29.01.08) |

| Name and mailing address of the ISA/ | Authorized officer |
|---|---|
| Japanese Patent Office | |
| Facsimile No. | Telephone No. |

Form PCT/ISA/210 (second sheet) (April 2007)

56

**INTERNATIONAL SEARCH REPORT**

| International application No. |
| --- |
| PCT/JP2007/074260 |

C (Continuation).   DOCUMENTS CONSIDERED TO BE RELEVANT

| Category* | Citation of document, with indication, where appropriate, of the relevant passages | Relevant to claim No. |
| --- | --- | --- |
| Y | JP 2000-250439 A  (Hitachi, Ltd.),<br>14 September, 2000 (14.09.00),<br>Par. Nos. [0014] to [0027]; Figs. 1, 2, 18<br>(Family: none) | 3 |
| A | JP 2001-306018 A  (Victor Company Of Japan, Ltd.),<br>02 November, 2001 (02.11.01),<br>Full text; all drawings<br>(Family: none) | 1-5 |

Form PCT/ISA/210 (continuation of second sheet) (April 2007)

## REFERENCES CITED IN THE DESCRIPTION

**Patent documents cited in the description**

- JP 2005236634 A
- JP 2002223167 A
- JP 2005039817 A
- JP 2004039300 A
- JP 8163582 A
- JP 2002232905 A
- JP 61167280 A
- JP 5084706 A
- WO 00010324 A
- JP 7095591 A
- JP 3271101 B